# EUROPEAN PATENT APPLICATION

(11) **EP 2 933 183 A1**
(43) Date of publication of application: **21.10.2015**
(21) Application number: 13862373.1
(22) Date of filing: 02.12.2013
(51) Int. Cl.: B63B 25/16, F02M 21/02, F25J 1/00, F17C 9/00, B63H 21/38

(54) **LIQUEFIED GAS PROCESSING SYSTEM FOR SHIP**

(30) Priority: 11.12.2012 KR 20120143522; 23.05.2013 KR 20130058587; 26.06.2013 KR 20130073731
(71) Applicant: Daewoo Shipbuilding & Marine Engineering Co., Ltd., Seoul 100-180 (KR)
(72) Inventor: BAE, Jae Ryu, Busan 618-410 (KR); CHOO, Gyo Sig, Geoje-si Gyeongsangnam-do 656-132 (KR); KIM, Jin Kang, Geoje-si Gyeongsangnam-do 656-130 (KR); KIM, Sung Soo, Geoje-si Gyeongsangnam-do 656-770 (KR)
(74) Representative: Intès, Didier Gérard André
(86) International application number: PCT/KR2013/011078
(87) International publication number: WO 2014/092368

(57) **Abstract**

Disclosed is a liquefied gas processing system for a ship that includes a storage tank that stores liquefied natural gas, and an engine that uses the liquefied natural gas stored in the storage tank as fuel. The liquefied gas processing system of the present invention comprises: a storage tank that stores liquefied gas; an engine that uses the liquefied gas stored in the storage tank as fuel; and a fuel supply line that can vaporize the liquefied gas and supply the generated gas to the engine as fuel. The engine receives a supply of the fuel gas that is pressurized at a low pressure.

## Description

### [Technical Field]

The present invention relates to a system for processing liquefied gas for a vessel.

### [Background Art]

In recent years, the consumption of liquefied gas such as liquefied natural gas (LNG) or liquefied petroleum gas (LPG) has been rapidly increasing throughout the world. Liquefied gas is transported in a gaseous state through onshore or offshore gas pipelines, or transported to a remote consumption site while being stored in a liquefied state inside a liquefied gas carrier. Liquefied gas, such as LNG or LPG, is obtained by cooling natural gas or petroleum gas to cryogenic temperatures (in the case of LNG, about -163°C). Since the volume of liquefied gas is considerably reduced as compared to a gaseous state, liquefied gas is suitable for long-distance marine transportation.

A liquefied gas carrier is designed to load liquefied gas, sail across the sea, and unload the liquefied gas at an onshore consumption site. To this end, the liquefied gas carrier includes a storage tank (also called a "cargo hold") that can withstand cryogenic temperatures of liquefied gas.

Examples of a marine structure provided with a storage tank capable of storing cryogenic liquefied gas may include vessels, such as a liquefied gas carrier and an LNG re-gasification vessel (LNG RV), or structures such as an LNG floating storage and re-gasification unit (LNG FSRU), an LNG floating, production, storage and off-loading (LNG FPSO) unit, and a barge mounted power plant (BMPP).

An LNG RV is a self-propelled, floating liquefied natural gas carrier equipped with an LNG re-gasification facility, and an LNG FSRU is a marine structure that stores LNG unloaded from an LNG carrier on the sea far away from the land and, if necessary, supplies the LNG to an onshore consumption site by gasifying the LNG. An LNG FPSO unit is a marine structure that refines extracted LNG on the sea, stores the LNG in a storage tank after direct liquefaction, and, if necessary, transships the LNG to an LNG carrier, and a BMPP is a structure that produces electricity on the sea using a power plant mounted on a barge.

The term "vessel" as used herein is a concept including vessels such as a liquefied gas carrier and an LNG RV, and structures such as an LNG FPSO, an LNG FSRU, and a BMPP.

Since the liquefaction temperature of natural gas is a cryogenic temperature of -163°C at atmospheric pressure, LNG is likely to be vaporized even when the temperature of LNG is slightly higher than -163°C at atmospheric pressure. In the case of a typical LNG carrier, even though an LNG storage tank is thermally insulated, external heat is continuously transferred to LNG. Therefore, boil-off gas is generated within the LNG storage tank due to continuous gasification of the LNG during the transportation of the LNG by the LNG carrier.

The generated boil-off gas (BOG) can increase the internal pressure of the storage tank and accelerate the flow of the liquefied gas due to the rocking of the vessel, causing structural problems. Therefore, it is necessary to suppress the generation of BOG.

In the related art, in order to suppress or process generation of BOG within a storage tank of a liquefied gas carrier, a method of discharging the BOG from the storage tank and burning the BOG, a method of discharging the BOG from the storage tank, re-liquefying the BOG through a re-liquefaction apparatus, and returning the BOG to the storage tank, a method of using the BOG as fuel for a propulsion engine of a vessel, and a method of suppressing the generation of BOG by maintaining an internal pressure of the storage tank at a high level have been used independently or in combination.

In the case of a typical vessel equipped with a BOG re-liquefaction apparatus, BOG inside a storage tank is discharged from the storage tank and then re-liquefied through a re-liquefaction apparatus in order to maintain a pressure of the storage tank at an appropriate level. The discharged BOG is re-liquefied through heat exchange with a refrigerant, for example, nitrogen or mixed refrigerant, cooled to a cryogenic temperature in the re-liquefaction apparatus including a refrigeration cycle, and the liquefied BOG is returned to the storage tank.

In the case of a typical LNG carrier equipped with a dual fuel diesel electric (DFDE) propulsion system, BOG is consumed by processing the BOG only through a BOG compressor and heating without a re-liquefaction system and then supplying the processed BOG as fuel to the DFDE. Therefore, there is a problem in that the BOG must be burnt in a gas combustion unit (GCU) or must be discharged to the air when requisite fuel for an engine is less than the generated BOG.

In the case of a typical LNG carrier equipped with the re-liquefaction system and a low speed diesel engine, although BOG can be processed through the re-liquefaction system, control of the entire system is complicated and a considerable amount of power is consumed due to complexity in operation of the re-liquefaction system using nitrogen gas.

In consequence, there is a need for consistent research and development on a system and method for efficiently processing boil-off gas (BOG), naturally generated from a storage tank, and liquefied gas.

### [Disclosure]

### [Technical Problem]

The present invention has been made in an effort to solve the problems associated with the related art and is aimed at providing a system for processing liquefied gas for a vessel, which can supply liquefied gas stored in a storage tank and boil-off gas evaporating from the liquefied gas as fuel to an engine mounted to a vessel, thereby efficiently using the liquefied gas and the boil-off gas.

### [Technical Solution]

In accordance with one aspect of the present invention, a system for processing liquefied gas for a vessel includes: a storage tank storing liquefied gas; an engine using the liquefied gas, stored in the storage tank, as fuel; and a fuel supply line supplying gas, generated by gasification of the liquefied gas, as fuel gas to the engine, wherein the engine receives the fuel gas compressed to a low pressure.

The system may further include a compressor line compressing boil-off gas (BOG), generated in the storage tank, through a compressor and supplying the compressed BOG as fuel to the engine; and a pump line compressing LNG, accommodated in the storage tank, through a pump and supplying the compressed LNG as fuel to the engine.

The system may further include a heat exchanger liquefying some of the BOG not supplied as the fuel to the engine.

In accordance with another aspect of the present invention, a system for processing liquefied gas for a vessel includes: a storage tank storing liquefied natural gas; an engine using boil-off gas (BOG) discharged from the storage tank as fuel; a compressor compressing the BOG generated in the storage tank; the engine using the BOG, compressed by the compressor, as fuel; and a heat exchanger liquefying some of the BOG not supplied to the engine.

The heat exchanger may liquefy some of the compressed BOG, not supplied to the engine, through heat exchange with BOG being discharged from the storage tank and delivered to the compressor.

The system may further include a decompressor decreasing pressure of the BOG liquefied in the heat exchanger.

The decompressor may include an expansion valve and an expander.

The system may further include a gas-liquid separator returning, to the storage tank, only a liquid component of BOG that is in a gas-liquid mixed state by decompression while passing through the decompressor.

The system may further include a cooler for cooling the liquefied BOG, supplied to the decompressor, through heat exchange with a gaseous component of the BOG that is in the gas-liquid mixed state by decompression while passing through the decompressor.

The gaseous component may flow into the BOG discharged from the storage tank and then supplied to the compressor.

The compressor may include a plurality of compression cylinders.

The system may further include a BOG consumption unit that receives and uses BOG compressed while passing through some of the plural compression cylinders in the compressor.

The BOG supplied to the heat exchanger may be BOG compressed while passing through some or all of the plural compression cylinders in the compressor.

The system may further include a vaporizer forcibly gasifying the liquefied natural gas stored in the storage tank and supplying the gasified gas to the compressor.

The system may further include a cooler for cooling the BOG, liquefied in the heat exchanger and then supplied to the decompressor, through heat exchange with a gaseous component of the BOG that is in the gas-liquid mixed state by decompression while passing through the decompressor.

The system may further include an orifice disposed at an upstream side of the decompressor to decompress the BOG compressed in the compressor and supply the decompressed BOG to the decompressor.

The engine may include a low-speed, two-stroke, low-pressure gas injection engine and a DF engine.

In accordance with a further aspect of the present invention, a system for processing liquefied gas for a vessel includes: a storage tank storing liquefied natural gas; and an engine using the liquefied natural gas, stored in the storage tank, as fuel, wherein the system has a first stream of boil-off gas (BOG) generated from the liquefied natural gas within the storage tank and discharged from the storage tank; a second stream of BOG flowing out of the first stream and supplied as fuel to the engine when the amount of the first stream is more than requisite fuel for the engine; and a third stream of BOG not supplied to the engine among the first stream, wherein the system processes the BOG without using a re-liquefaction apparatus having a separate refrigeration cycle, by liquefying the third stream by heat exchange between the third stream and the first stream.

In accordance with another aspect of the present invention, a system for processing liquefied gas for a vessel includes: a storage tank storing liquefied natural gas; an engine using the liquefied natural gas, stored in the storage tank, as fuel; a compressor line compressing BOG, generated from the storage tank, through a compressor and supplying the compressed BOG as fuel to the engine; a pump line compressing LNG, accommodated in the storage tank, through a pump and supplying the compressed LNG as fuel to the engine; and a gas-liquid separator disposed at the pump line and separating a heavy hydrocarbon component from the LNG to adjust a methane number of the LNG to a value required by the engine,.

The system may further include a vaporizer disposed at an upstream side of the gas-liquid separator and partially gasifying LNG, supplied to the gas-liquid separator, by heating.

The system may further include a return line for returning a liquid component, separated in the gas-liquid separator, to the storage tank.

The engine may include a main engine and an auxiliary engine and at least one of the main engine and the auxiliary engine may require methane number adjustment.

In accordance with yet another aspect of the present invention, a method of supplying fuel gas to an engine by a liquefied gas processing system is provided, wherein the liquefied gas processing system includes: a storage tank storing liquefied natural gas; the engine using the liquefied natural gas, stored in the storage tank, as fuel; a compressor line compressing BOG, generated from the storage tank, through a compressor and supplying the compressed BOG as fuel to the engine; and a pump line compressing LNG, accommodated in the storage tank, through a high-pressure pump and supplying the compressed LNG as fuel to the engine, and the method includes adjusting a methane number of the LNG to a requisite value for the engine by separating a heavy hydrocarbon component from the LNG when the LNG is supplied to the engine through the pump line.

In accordance with yet another aspect of the present invention, a method of processing liquefied gas by a liquefied gas processing system for a vessel is provided, wherein the liquefied gas processing system includes: a storage tank storing LNG; a main engine and an auxiliary engine using the LNG, stored in the storage tank, as fuel; a compressor line compressing BOG, generated from the storage tank, through a compressor and supplying the compressed BOG as fuel to the main and auxiliary engines; and a pump line compressing the LNG, accommodated in the storage tank, through a pump and supplying the compressed LNG as fuel to the main and auxiliary engines, and the BOG generated from the storage tank is supplied as fuel to at least one of the main and auxiliary engines through the compressor line in a laden state in which a larger amount of LNG is stored in the storage tank than in a ballast state.

In the ballast state, the LNG stored in the storage tank may be supplied as fuel to the main and auxiliary engines through the pump line.

In the ballast state, the BOG generated from the storage tank may be supplied as fuel to one of the main and auxiliary engines through the compressor line.

In the ballast state, the BOG generated from the storage tank may be supplied as fuel to the auxiliary engine through the compressor line, and the LNG stored in the storage tank may be supplied as fuel to the main engine through the pump line.

In the ballast state, the BOG generated from the storage tank may be intermittently supplied as fuel to at least one of the main and auxiliary engines through the compressor line, and the LNG stored in the storage tank may be supplied as fuel to at least one of the main and auxiliary engines through the pump line when the BOG is not supplied to at least one of the main and auxiliary engines.

In the ballast state, the BOG generated from the storage tank and the LNG stored in the storage tank may be simultaneously supplied as fuel to the main and auxiliary engines.

The compressor may include a plurality of compression cylinders, and the BOG generated from the storage tank may be compressed by some of the plural compression cylinders and then supplied as fuel to the auxiliary engine.

The BOG generated from the storage tank and forcibly gasified LNG may be compressed by the compressor and then supplied as fuel to at least one of the main and auxiliary engines.

When the LNG stored in the storage tank is supplied to the auxiliary engine, a heavy hydrocarbon component may be separated from the LNG in order to adjust a methane number of the LNG to a requisite value for the auxiliary engine.

Among the BOG compressed by the compressor, BOG not supplied as fuel to the main and auxiliary engines may be liquefied through heat exchange with BOG discharged from the storage tank and delivered to the compressor.

In accordance with yet another aspect of the present invention, a system for processing liquefied gas for a vessel includes: a storage tank storing LNG; a main engine and an auxiliary engine using the LNG, stored in the storage tank, as fuel; a main BOG supply line compressing BOG, generated from the storage tank, through a compressor and supplying the compressed BOG as fuel to the main engine; a sub-BOG supply line compressing the BOG, generated from the storage tank, through the compressor and supplying the compressed BOG as fuel to the auxiliary engine; a main LNG supply line compressing the LNG, stored in the storage tank, through a pump and supplying the compressed LNG as fuel to the main engine; and a sub-LNG supply line compressing the LNG, stored in the storage tank, through the pump and supplying the compressed LNG as fuel to the auxiliary engine.

The pump may include at least one of a discharge pump disposed inside the storage tank and discharging the LNG to the outside of the storage tank and a pump disposed outside the storage tank.

In accordance with yet another aspect of the present invention, a system for processing liquefied gas for a vessel includes: a storage tank storing liquefied natural gas; and an engine using the liquefied natural gas, stored in the storage tank, as fuel, wherein the system has a first stream of boil-off gas (BOG) generated from the liquefied natural gas within the storage tank and discharged from the storage tank; a second stream of BOG supplied as fuel to the engine among the first stream; and a third stream of BOG not supplied as fuel to the engine among the first stream, wherein the first stream is compressed and divided into the second and third streams in a compression apparatus, and the third stream is liquefied through heat exchange with the first stream in a heat exchanger without a re-liquefaction apparatus using a separate refrigerant, all of the liquefied third stream returning to the storage tank after decompression.

The third stream may be in a gas-liquid mixed state after decompression, and both gas and liquid components may return to the storage tank.

The gaseous component may be discharged from the storage tank and supplied to the compression apparatus, together with BOG newly generated from the storage tank.

A decompressor for decompressing the third stream may be an expansion valve or an expander.

The compression apparatus may include a plurality of compression cylinders.

The first stream may be compressed while passing through some or all of the plural compression cylinders included in the compression apparatus and delivered to the heat exchanger.

The engine may include a low-speed, two-stroke, low-pressure gas injection engine which is a main engine, and a DF engine which is an auxiliary engine.

The second stream may be supplied as fuel to the engine through a line provided to the main engine after passing through all of the compression cylinders in the compression apparatus and a line provided to the auxiliary engine after passing through some of the compression cylinders in the compression apparatus.

The compression apparatus may include a first compressor and a second compressor.

The second stream may be compressed in the first compressor and flow out of the first stream.

The third stream may be further compressed while passing through the second compressor and then supplied to the heat exchanger.

The system may further include a vaporizer forcibly gasifying the liquefied natural gas stored in the storage tank and supplying the gasified gas to the compression apparatus.

### [Advantageous Effects]

As described above, embodiments of the present invention provides a system for processing liquefied gas for a vessel that can supply liquefied gas stored in a storage tank and boil-off gas evaporating from the liquefied gas as fuel to an engine mounted to a vessel, thereby efficiently using the liquefied gas and the boil-off gas.

In addition, embodiments of the present invention provides a system for processing liquefied gas for a vessel that can gasify liquefied gas, stored in a storage tank, after compression by a pump and supply the liquefied gas to an engine, and compress boil-off gas, evaporating from the liquefied gas, with a compressor after discharge from the storage tank to supply the boil-off gas to the engine.

Further, embodiments of the present invention provides a system for processing liquefied gas for a vessel that can compress boil-off gas (BOG) discharged from a storage tank, supply some of the compressed BOG as fuel to an engine of a vessel, for example a propulsion system, and liquefy the rest of the compressed BOG by cold heat of BOG, newly discharged from the storage tank and not yet compressed, to return the rest of the compressed BOG to the storage tank.

Thus, according to the embodiments of the invention, the system for processing liquefied gas can re-liquefy BOG generated from a storage tank without a re-liquefaction apparatus requiring much energy consumption and excessive initial installation cost, thereby reducing energy consumption in the re-liquefaction apparatus.

In addition, according to the embodiments of the invention, the system for processing liquefied gas can use all BOG, generated during transportation of cargo (i.e. LNG) by an LNG carrier, as fuel of an engine, or store it again in a cargo tank through re-liquefaction, thereby reducing BOG wasted by a GCU or the like, and processing BOG through re-liquefaction without using a separate refrigerant such as nitrogen or the like.

Further, according to the embodiments of the invention, the system for processing liquefied gas does not require a re-liquefaction apparatus using a separate refrigerant (i.e. a nitrogen-refrigerant refrigeration cycle or a mixed-refrigerant refrigeration cycle) so that it is unnecessary to additionally install facilities for supplying and storing a refrigerant, thereby reducing initial installation and operation costs for the entire system.

Furthermore, according to the embodiments of the invention, the system for processing liquefied gas can decompress BOG, cooled and liquefied in a heat exchanger after compression, with an expander to generate energy during expansion, thereby reusing wasted energy.

### [Description of Drawings]

Figure 1 is a schematic configuration diagram of a liquefied gas processing system for a vessel according to a first embodiment of the present invention.
Figure 2 is a schematic configuration diagram of a liquefied gas processing system for a vessel according to a second embodiment of the present invention.
Figures 3 and 4 are schematic configuration diagrams of liquefied gas processing systems for a vessel according to modified examples of the second embodiment of the present invention.
Figure 5 is a schematic configuration diagram of a liquefied gas processing system for a vessel according to a third embodiment of the present invention.
Figure 6 is a schematic configuration diagram of a liquefied gas processing system for a vessel according to a fourth embodiment of the present invention.
Figures 7 and 8 are schematic configuration diagrams of liquefied gas processing systems for a vessel according to modified examples of the fourth embodiment of the present invention.
Figure 9 is a schematic configuration diagram of a liquefied gas processing system for a vessel according to a fifth embodiment of the present invention.
Figures 10 to 12 are schematic configuration diagrams of liquefied gas processing systems for a vessel according to modified examples of the fifth embodiment of the present invention.
Figure 13 is a schematic configuration diagram of a liquefied gas processing system for a vessel according to a sixth embodiment of the present invention.
Figures 14 to 17 are schematic configuration diagrams of liquefied gas processing systems for a vessel according to modified examples of the sixth embodiment of the present invention.
Figure 18 is a sectional view showing an example of an engine that receives liquefied gas as fuel through a liquefied gas processing system.

### [Detailed Description of Exemplary Embodiments]

The International Maritime Organization (IMO) regulates the emission of nitrogen oxides (NO_{X}) and sulfur oxides (SO_{X}) among exhaust gases of vessels, and these days, also tries to regulate the emission of carbon dioxide (CO₂). Particularly, the issue of the regulation of nitrogen oxides (NO_{X}) and sulfur oxides (SO_{X}) was raised by the Prevention of Marine Pollution from Ships (MARPOL) protocol in 1997. After eight long years, the protocol met requirements for effectuation and entered into force in May 2005. Currently, the regulation is in force as a compulsory provision.

Therefore, in order to meet such provisions, a variety of methods have been introduced to reduce the emission of nitrogen oxides (NOX). As one of these methods, a high-pressure natural gas injection engine, for example an ME-GI engine, for an LNG carrier has been developed and used. The ME-GI engine is being spotlighted as a next-generation eco-friendly engine capable of reducing emission of carbon dioxide by 23% or more, nitrogen compounds by 80% or more, and sulfur compounds by 95% or more, as compared with a diesel engine having the same output.

Such an ME-GI engine may be disposed in vessels such as an LNG carrier which transports LNG while storing the LNG in a storage tank capable of withstanding a cryogenic temperature. The term "vessel" as used herein includes an LNG carrier, an LNG RV, and offshore plants such as an LNG FPSO and an LNG FSRU. In this case, the ME-GI engine uses natural gas as fuel and requires a high pressure of about 150 to 400 bara (absolute pressure) for gas supply, depending upon a load thereof.

The ME-GI engine may be directly coupled to a propeller for propulsion and, to this end, includes a two-stroke engine rotating at a low speed. That is, the ME-GI engine is a low-speed two-stroke high-pressure natural gas injection engine.

In addition, in order to reduce the emission of nitrogen oxides, a DF engine (for example, a dual fuel diesel generator (DFDG)) using a mixture of diesel oil and natural gas as fuel has been developed and used for propulsion or power generation. The DF engine may burn the mixture of oil and natural gas or use only one selected from the oil and the natural gas as fuel. Since less sulfur compounds are contained in natural gas than oil, sulfur oxide content of exhaust gas is reduced.

A DF engine does not require such high-pressure fuel gas as an ME-GI engine and requires fuel gas compressed to a pressure of about several to tens of bara. The DF engine obtains electrical power by driving a power generator using driving force, and drives a propulsion motor or operates a variety of apparatuses or facilities using the electrical power.

When natural gas is supplied as fuel, it is unnecessary to adjust a methane number for an ME-GI engine, whereas it is necessary to adjust a methane number for a DF engine.

When LNG is heated, a methane component having a relatively low liquefaction temperature is preferentially gasified. Therefore, boil-off gas (BOG) with a high methane content may be supplied as fuel to a DF engine. However, the LNG has a lower methane content than the BOG so that a methane number of the LNG is lower than a requisite methane number for the DF engine, and ratios of hydrocarbon components (methane, ethane, propane, butane, and the like) constituting LNG vary depending upon production sites. Thus, LNG is not suitable to supply as fuel to the DF engine after gasification.

In order to adjust a methane number, a heavy hydrocarbon (HHC) component having a higher liquefaction temperature than methane may be liquefied and removed by forcibly gasifying and cooling liquefied natural gas. After adjustment of the methane number, the methane-number-adjusted natural gas may be additionally heated depending upon a requite temperature for an engine.

In order to overcome shortcomings of the ME-GI engine which has difficulty in configuring a system due to a requisite high pressure in spite of high efficiency and requires much installation cost and space, there has been developed a low-pressure gas injection two-stroke low-speed marine engine that can supply fuel at a low pressure (i.e. a high-pressure pump or compressor, a cryogenic pump, and the like can be omitted) while meeting emission standards of environmental pollutants and, if necessary, use LNG and heavy fuel oil (HFO) as fuel independently or in combination (i.e. dual fuel can be employed).

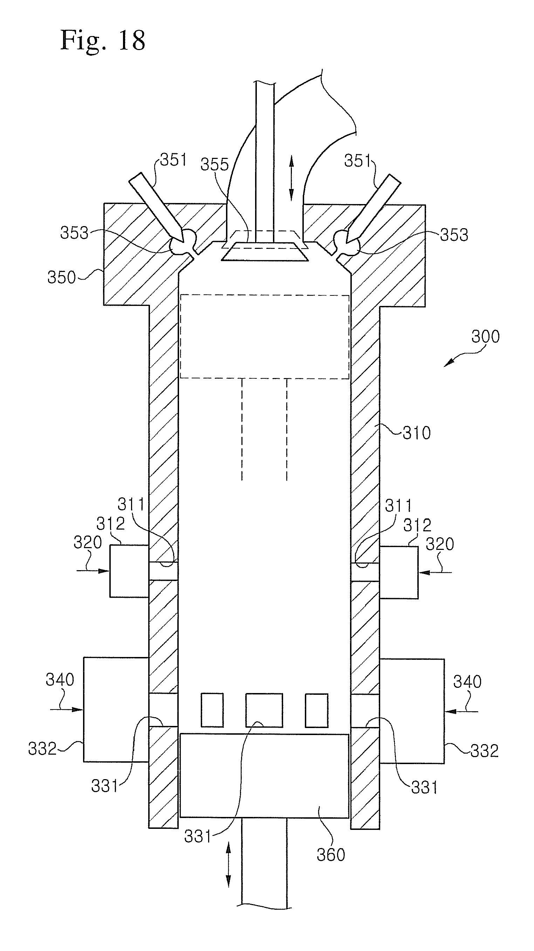

Figure 18 is a sectional view showing an example of an engine that receives liquefied gas as fuel through a liquefied gas processing system according to various embodiments of the present invention which will be described below.

The engine shown in Figure 18 is a low-speed two-stroke low-pressure gas injection engine that compresses gas to a lower pressure than the aforementioned MEGI engine and supplies the compressed gas as fuel. In the specification, it should be understood that the term "high pressure" refers to a requisite fuel supply pressure for an MEGI engine (low-speed two-stroke high-pressure gas injection engine), for example, a pressure of about 150 to 400 bara (absolute pressure), and the term "low pressure" refers to a requisite fuel supply pressure for a low-speed two-stroke low-pressure gas injection engine, for example, a pressure of about 5 to 40 bara.

As shown in Figure 18, an engine 300 includes a cylinder 110 and a piston 360. The cylinder 110 is formed in the middle thereof with low-pressure gas supply ports 311 and at a lower end portion thereof with combustion air supply ports 331 that may be opened when the piston 360 is located at the bottom dead point.

The low-pressure gas supply ports 311 are mounted with valves 312 that may introduce low-pressure gas (about 5 to 40 bara), supplied through low-pressure gas supply lines 320, into the cylinder 310.

An air receiver 332 enclosing the lower end portion of the cylinder 310 and the air supply ports 331 may introduce combustion air, supplied through air supply lines 340, into the cylinder 310.

A cylinder head 350 is formed with one or more pre-chambers 353 equipped with one or more fuel nozzles 351 for injecting pilot fuel thereinto. In addition, the cylinder head 350 is equipped with an exhaust valve 355 for discharging exhaust gas.

Low-pressure compressed natural gas (i.e. gasified LNG) may be supplied as fuel through the low-pressure gas supply ports 311, and oil may be supplied as fuel through the fuel nozzles 351. The oil injected into the pre-chambers 353 through the fuel nozzles 351 may act as pilot fuel (about 1%) for triggering ignition of the low-pressure gas. Ignition plugs may be fitted to the pre-chambers for ignition of the pilot fuel, and may also be integrally formed with the fuel nozzles. Since technologies using a pre-chamber and pilot fuel for combustion of dilute gas have already been commercialized, more detailed descriptions thereof will be omitted.

The air supply ports 331 and the exhaust valve 355 of the engine 300 are opened when the piston 360 is located at the bottom dead point as shown by a solid line in Figure 18. As combustion air is supplied into the cylinder 310 through the opened air supply ports 331, exhaust gas is discharged by scavenging.

When the piston 360 starts to move upward, the air supply ports 331 are closed, and prior to a further increase in the internal pressure of the cylinder, the valves 312 are opened so that low-pressure gas of about 5 to 40 bara is supplied as fuel into the cylinder 310 through the low-pressure gas supply ports 311.

When the piston 360 is located at the top dead point as shown by a dotted line in Figure 18, explosion of the gas fuel is triggered with propagation of flame into the cylinder 310 due to ignition in the pre-chambers 353, whereby the piston 360 moves to the bottom dead point to generate driving force.

Hereinafter, configurations and operations of the liquefied gas processing system according to embodiments of the present invention will be described in detail with reference to the accompanying drawings. The following embodiments may be modified in various forms and the scope of the present invention is not limited thereto.

Liquefied gas processing systems according to the embodiments of the invention may be employed for vessels such as LNG carriers mounted with, for example, the low-speed two-stroke low-pressure gas injection engine, shown in Figure 18, as a main engine for propulsion (i.e. a propulsion unit using LNG as fuel).

### Embodiment 1

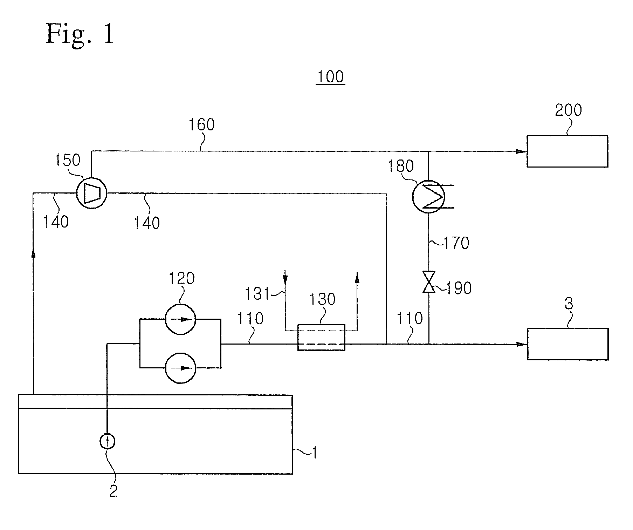

Figure 1 is a configuration diagram of a liquefied gas processing system according to a first embodiment of the present invention. Referring to Figure 1, a liquefied gas processing system 100 according to this embodiment includes a fuel supply line 110 configured to provide a path for delivering LNG from a storage tank 1 to a main engine 3 as a propulsion system, and a boil off gas (BOG) line 140 configured to provide a path for delivering BOG, generated from the storage tank 1, to the main engine 3. The liquefied gas processing system 100 using BOG according to this embodiment supplies LNG as fuel to the main engine 3 through the fuel supply line 110 by virtue of an LNG pump 120 and an LNG vaporizer 130, supplies BOG, compressed by a BOG compressor 150, as fuel to the main engine 3 through the BOG line 140, and supplies excess BOG from the BOG compressor 150 to an integrated IGG/GCU system 200.

A low-speed two-stroke low-pressure gas injection engine, used as the main engine 3, may be supplied fuel, for example, at a low pressure of about 5 to 40 bara (absolute pressure). Thus, a pump and a compressor capable of compressing LNG and BOG to a requisite pressure for the main engine 3, respectively, are used as the LNG pump 120 and the BOG compressor 150 according to this embodiment.

For example, the fuel supply line 110 provides a path for delivering LNG, supplied by a delivery pump 2, as fuel from the storage tank 1 of LNGC to the main engine 3, and the LNG pump 120 and the LNG vaporizer 130 are disposed at the fuel supply line 110.

A plurality of LNG pumps 120 may be disposed in parallel as in this embodiment to provide requisite pumping force for delivery of LNG to the fuel supply line 110.

According to this embodiment, two pumps, namely, the delivery pump 2 and the LNG pump 120 are disposed at the fuel supply line 110 inside and outside the storage tank 1, respectively, to compress fuel in two stages. However, if only one pump compresses LNG to a requisite pressure for the main engine 3, only one of the delivery pump 2 and the LNG pump 120 may be disposed at the fuel supply line 110.

The LNG vaporizer 130 is disposed at a rear end of the LNG pump 120 on the fuel supply line 110 to gasify LNG delivered by the LNG pump 120. The LNG may be gasified through heat exchange with a heating medium circulating via a heating medium circulation line 131 or by various heaters, including heaters, for providing heat of gasification thereto. The heating medium circulating via the heating medium circulation line 131 may include, for example, steam generated from boilers.

The BOG line 140 provides a path for delivering BOG, naturally generated from the storage tank 1, to the main engine 3. The BOG line 140 may be connected to the fuel supply line 110 as in this embodiment or directly to the main engine 3 to supply BOG as fuel to the main engine 3.

The BOG compressor 150 is disposed at the BOG line 140 to compress BOG passing through the BOG line 140. Although only one BOG compressor 150 is shown in Figure 1, similar to the typical fuel supply system, the system according to this embodiment may be configured such that two compressors having the same specifications are connected to each other in parallel to meet failsafe requirements. However, a single BOG compressor 150, disposed where an excess BOG line 160 branches from the BOG line 140, can cause additional effects of reducing an economic burden depending upon installation thereof and a burden of maintenance therefor.

The excess BOG line 160 provides a path for supplying excess BOG from the BOG compressor 150 to the integrated IGG/GCU system 200, and may supply excess BOG as fuel to an auxiliary engine, such as a DF engine, as well as the integrated IGG/GCU system 200.

The integrated IGG/GCU system 200 is implemented by integrating an inert gas generator (IGG) and a gas combustion unit (GCU).

The excess BOG line 160 and the fuel supply line 110 may be connected to each other through a connection line 170. Therefore, the connection line 170 makes it possible to use excess BOG as fuel for the main engine 3 or gasified LNG as fuel for the integrated IGG/GCU system 200. A heater 180 for heating the BOG or gasified LNG and a pressure reduction valve (PRV) 190 for reducing excess pressure by controlling pressure of the BOG or the gasified LNG may be disposed at the connection line 170. The heater 180 may include various heaters such as a gas heater using combustion heat of gas and a heating-medium circulation unit providing a heat source by circulating a heating medium.

Operations of the liquefied gas processing system according to the first embodiment of the invention will be described below.

When pressure within the storage tank 1 is higher than or equal to a predetermined pressure or a large amount of BOG is generated, the BOG compressor 150 supplies compressed BOG as fuel to the main engine 3. In contrast, when the pressure within the storage tank 1 is lower than the predetermined pressure or a small amount of BOG is generated, the LNG vaporizer 130 gasifies LNG delivered by the LNG pump 120 to supply the gasified LNG as fuel to the main engine 3.

Excess BOG is supplied from the BOG compressor 150 to the integrated IGG/GCU system 200 or the auxiliary engine, such as a DF engine, through the excess BOG line 160 for the purpose of consuming the BOG or generating inert gas for supply to the storage tank 1 and, in addition, using the BOG as fuel for the auxiliary engine.

The integrated IGG/GCU system 200 may consume the BOG continuously generated from the storage tank 1, by burning the BOG within a main body 210 thereof, and if necessary, may also generate combustion gas as inert gas for supply to the storage tank 1.

### Embodiment 2

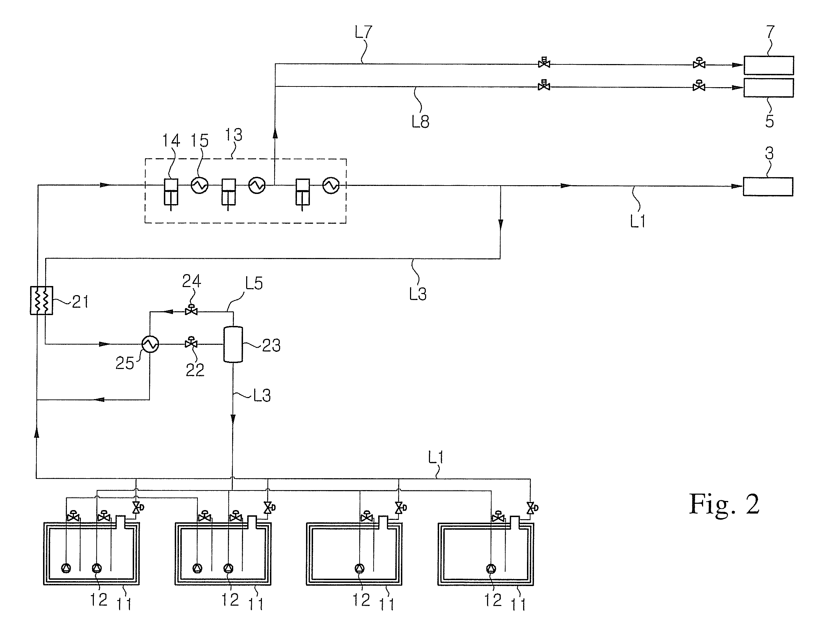

Figure 2 is a schematic configuration diagram of a liquefied gas processing system for a vessel according to a second embodiment of the present invention.

In Figure 2, the liquefied gas processing system according to this embodiment is employed for an LNG carrier equipped with an engine capable of using natural gas as fuel (i.e. a propulsion unit using LNG as fuel), for example, a low-speed two-stroke low-pressure gas injection engine. However, the liquefied gas processing system may be employed for all types of vessels equipped with a liquefied gas storage tank, such as an LNG carrier and an LNG re-gasification vessel (LNG RV), or offshore plants such as an LNG floating, production, storage and off-loading (LNG FPSO) unit, an LNG floating storage and re-gasification Unit (LNG FSRU), and a barge mounted power plant (BMPP).

In the liquefied gas processing system for the vessel according to the second embodiment of the invention, natural boil-off gas (NBOG) discharged from storage tanks 11 for storing liquefied gas is delivered to a compressor 13 along a BOG supply line L1, compressed by the compressor 13, and then supplied to a main engine 3, for example, a low-speed two-stroke low-pressure gas injection engine. The BOG is compressed to a low pressure of about 5 to 40 bara by the compressor 13 and then supplied as fuel to the main engine 3, for example, the low-speed two-stroke low-pressure gas injection engine.

While the storage tanks are provided with a sealing and insulation barrier to store liquefied gas such as LNG in a cryogenic state, the storage tanks cannot completely interrupt heat transfer from the outside thereof. Accordingly, liquefied gas continuously evaporates within the storage tanks 11, and BOG within the storage tanks 11 is discharged through the BOG supply line L1 to maintain the BOG at an appropriate pressure level.

The storage tanks 11 are equipped therein with discharge pumps 12, respectively, to discharge LNG to the outside thereof, if necessary.

The compressor 13 may include one or more compression cylinders 14 and one or more intermediate coolers 15 for cooling BOG heated while being compressed. The compressor 13 may be configured to compress BOG to a pressure of, for example, about 40 bara. While the multistage compressor 13 including three compression cylinders 14 and three intermediate coolers 15 is exemplified in Figure 2, the compressor 13 may include one or two compression cylinders and intermediate coolers, and the number of compression cylinders and intermediate coolers may be varied as needed. The compressor 13 may be changed to have a structure in which a plurality of compressors is connected to each other in series, in addition to the structure in which a plurality of compression cylinders is arranged within one compressor.

The BOG compressed by the compressor 13 is supplied to the main engine 3, for example a low-speed two-stroke low-pressure gas injection engine, through the BOG supply line L1, in which case all or some of the compressed BOG may be supplied to the main engine 3 depending upon requisite fuel for the main engine 3.

In addition, according to the second embodiment of the invention, a first stream referring to BOG discharged from the storage tanks 11 and then compressed by the compressor 13 (i.e. all BOG discharged from the storage tanks) may be divided into a second stream and a third stream after compression. The second stream may be supplied as fuel to the main engine 3, and the third stream may return to the storage tanks 11 after liquefaction.

At this time, the second stream is supplied to the main engine 3 through the BOG supply line L1. If necessary, the second stream may be supplied as fuel via a line passing through all the compression cylinders 14 included in the compressor 13 and then connecting with the main engine 3 (i.e. the BOG supply line L1) and a line passing through some of the compression cylinders 14 included in the compressor 13 and then connecting with an auxiliary engine 5, for example, a DF engine (DFDG) (i.e. a BOG branch line L8).

The third stream returns to the storage tanks 11 through a BOG return line L3. A heat exchanger 21 is disposed at the BOG return line L3 to cool and liquefy the third stream of the compressed BOG. The heat exchanger 21 exchanges heat between the third stream of the compressed BOG and the first stream of the BOG discharged from the storage tanks 11 and then supplied to the compressor 13.

Since a flow rate of the first stream of the BOG before compression is greater than that of the third stream, the third stream of the compressed BOG may be liquefied by receiving cold heat from the first stream. As such, the heat exchanger 21 exchanges heat between the cryogenic BOG immediately after discharge from the storage tanks 11 and the high-pressure BOG compressed by the compressor 13, to thereby cool and liquefy the high-pressure BOG.

LBOG at least partially liquefied by cooling in the heat exchanger 21 is decompressed while passing through an expansion valve 22 as a decompressor and supplied in a gas-liquid mixed state to a gas-liquid separator 23. The LBOG may be decompressed to about atmospheric pressure (for example, a pressure of 3 bara) while passing through the expansion valve 22. The LBOG is separated into gaseous and liquid components in the gas-liquid separator 23. The liquid component, namely, LNG is delivered to the storage tanks 11 through the BOG return line L3, and the gaseous component, namely, BOG flows into the BOG, discharged from the storage tanks 11 and supplied to the compressor 13, through a BOG recirculation line L5. More specifically, the BOG recirculation line L5 extends from an upper end of the gas-liquid separator 23 and is connected to an upstream side of the heat exchanger 21 on the BOG supply line L1.

It is advantageous to set the pressure of the BOG after decompression by the decompressor to a pressure higher than the internal pressure of the storage tanks 11 such that the decompressed BOG may smoothly return to the storage tanks 11 and the gaseous component of the decompressed BOG may smoothly flow into the BOG supply line L1 through the BOG recirculation line L5.

For convenience of description, the heat exchanger 21 has been illustrated as being disposed at the BOG return line L3. However, since the heat exchanger 21 actually exchanges heat between the first stream of the BOG delivered through the BOG supply line L1 and the third stream of the BOG delivered through the BOG return line L3, it should be understood that the heat exchanger 21 is also disposed at the BOG supply line L1.

Another expansion valve 24 may be further disposed at the BOG recirculation line L5, and thus, the gaseous component discharged from the gas-liquid separator 23 may be decompressed while passing through the expansion valve 24. A cooler 25 is disposed at the BOG recirculation line L5 to further cool the third stream by exchanging heat between the third stream of the BOG, liquefied in the heat exchanger 21 and then supplied to the gas-liquid separator 23, and the gaseous component separated in the gas-liquid separator 23 and delivered through the BOG recirculation line L5. That is, the cooler 25 additionally cools the BOG in the high-pressure liquid state into the natural gas in the low-pressure cryogenic gaseous state.

According to this embodiment, the gaseous component discharged from the gas-liquid separator 23 is decompressed and then flows into the first stream of the BOG being supplied to the compressor 13. The compressor, while compressing gas, consumes constant power up to a predetermined inflow level, but more power beyond the predetermined inflow level. Therefore, power consumption of the compressor is not increased even though gas is added up to the predetermined inflow level. Accordingly, when the gaseous component discharged from the gas-liquid separator is additionally supplied to the compressor up to the level at which the power consumption remains constant, the compressor can effectively process the BOG without additional power consumption.

Here, for convenience of description, the cooler 25 has been illustrated as being disposed at the BOG recirculation line L5. However, since the cooler 25 actually exchanges heat between the third stream of the BOG delivered through the BOG return line L3 and the gaseous component delivered through the BOG recirculation line L5, it should be understood that the cooler 25 is also disposed at the BOG return line L3.

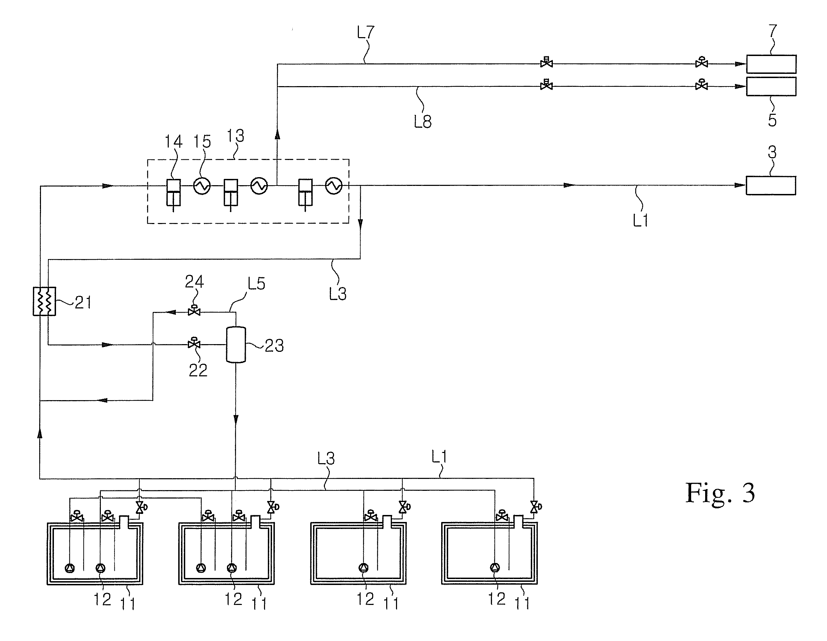

As shown in Figure 3, according to a modified example of this embodiment, a system may be configured such that the cooler 25 is omitted. Although overall system efficiency may be slightly deteriorated without the cooler 25, there are advantages of facilitating arrangement of pipelines and operation of the system and reducing cost of initial installation and maintenance for the cooler.

When generation of excess BOG is expected due to BOG within storage tanks 11 more than requisite fuel for a low-speed two-stroke low-pressure gas injection engine, BOG having been completely compressed or being currently stepwise compressed in a compressor 13 flows out of the compressor through BOG branch lines L7, L8 to reach a BOG consumption unit. The BOG consumption unit may include a GCU 7 or an auxiliary engine 5 (for example, a DF generator (DFDG), a gas turbine, or the like) that may use low-pressure compressed natural gas as fuel. The BOG flowing out of the middle end of the compressor 13 via the BOG branch line L7, L8 may have a pressure of about 5 to 10 bara.

As described above, in the system and method for processing liquefied gas according to the second embodiment of the invention, BOG generated during transportation of cargo (i.e. LNG) by an LNG carrier can be used as fuel of an engine or stored again in storage tanks through re-liquefaction, thereby making it possible to reduce or eliminate BOG wasted by a GCU or the like and process BOG through re-liquefaction without a re-liquefaction apparatus using a separate refrigerant such as nitrogen or the like.

In addition, in the system and method for processing liquefied gas according to the second embodiment of the invention, it is unnecessary to install a re-liquefaction apparatus using a separate refrigerant. Therefore, facilities for supplying and storing a refrigerant need not be additionally disposed, thereby reducing initial installation and operation costs for the entire system.

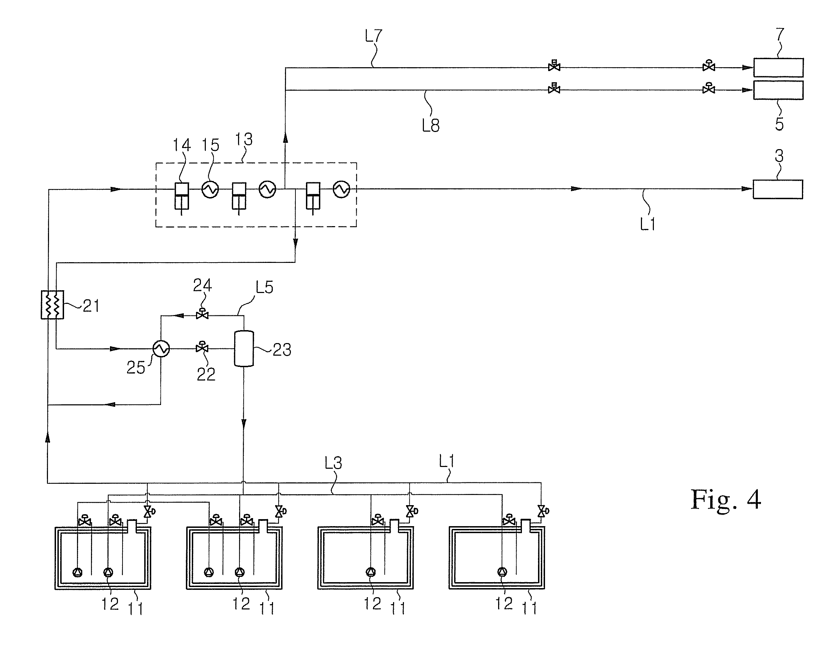

Although a BOG return line L3 for supplying compressed BOG to a heat exchanger 21 branches off from a rear end of the compressor 13 in Figure 2, like the aforementioned BOG branch lines L7, L8, the BOG return line L3 may be disposed such that BOG being currently stepwise compressed in the compressor 13 may flow out of the compressor. Figure 4 shows a modified example in which BOG compressed in two stages by two cylinders flows out of a compressor. The BOG flowing out of a middle end of the compressor 13 may have a pressure of about 5 to 10 bara.

Particularly, when using a Burckhardt compressor, including three front-end cylinders operating in an oil-free manner and two rear-end cylinders operating in an oil-lubricated manner, BOG needs to be delivered via an oil filter when flowing out of a rear end or a fourth or higher stage of the compressor. However, advantageously, the oil filter is not required when the BOG flows out of a third or lower stage of the compressor.

### Embodiment 3

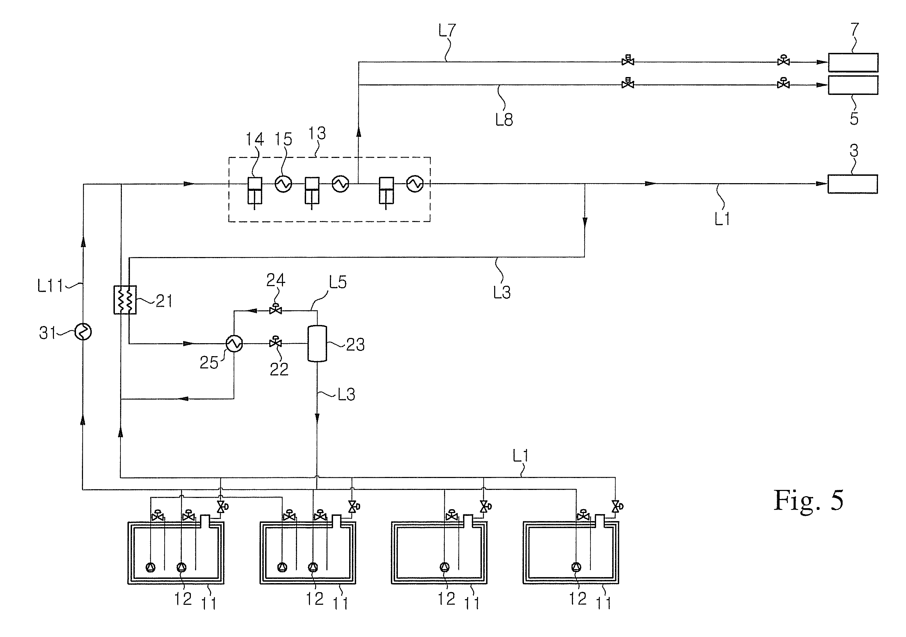

Figure 5 is a schematic configuration diagram of a liquefied gas processing system for a vessel according to a third embodiment of the present invention.

The liquefied gas processing system according to the third embodiment is different from that according to the second embodiment in that LNG may be used through forced gasification when requisite BOG for a main engine 3 or an auxiliary engine 5 is exceeds naturally generated BOG. Hereinafter, only the difference from the second embodiment will be described in more detail. In addition, like elements to those of the second embodiment are denoted by like numerals, and detailed descriptions thereof will be omitted.

The liquefied gas processing system for the vessel according to the third embodiment of the invention is similar to that according to the second embodiment in that NBOG, discharged from storage tanks 11 for storing liquefied gas, is delivered to a compressor 13 along a BOG supply line L1, compressed by the compressor 13, and then supplied to the main engine 3, for example, a low-speed two-stroke low-pressure gas injection engine, or alternatively, the NBOG is supplied as fuel to the auxiliary engine 5, for example a DF engine (DF generator), after being completely compressed or while being compressed in multiple stages in the compressor 13.

However, the liquefied gas processing system according to this embodiment is equipped with a forced gasification line L11 such that a vaporizer 31 may gasify LNG stored in the storage tanks 11 to supply the gasified LNG to the compressor 13 when requisite BOG as fuel for the main engine 3 and the auxiliary engine 5 exceeds BOG naturally generated in the storage tanks 11.

When equipped with the forced gasification line L11 as in the third embodiment, the system can stably supply fuel even when a small amount of BOG is generated on account of a small amount of LNG stored in the storage tanks, or requisite BOG as fuel for various types of engines exceeds naturally generated BOG.

### Embodiment 4

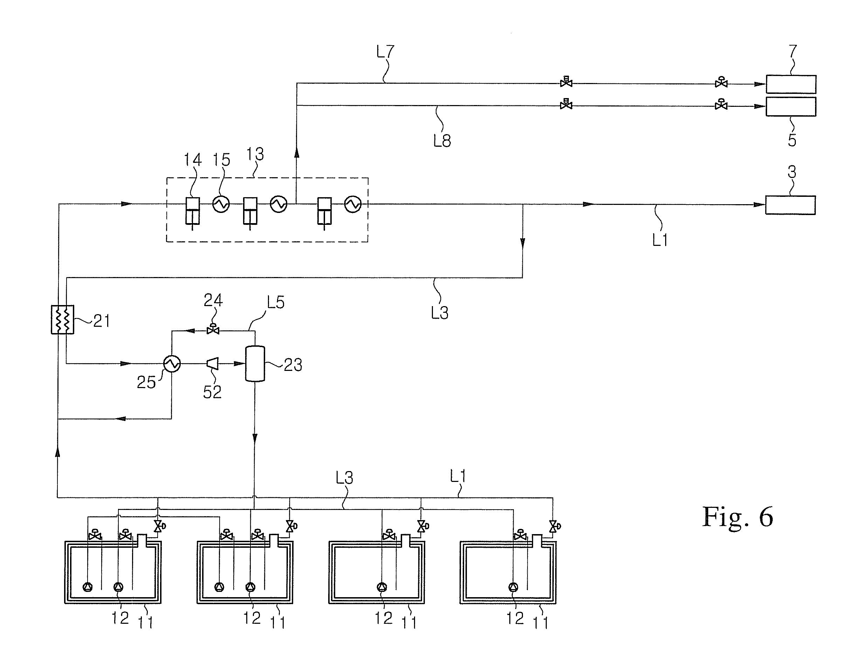

Figure 6 is a schematic configuration diagram of a liquefied gas processing system for a vessel according to a fourth embodiment of the present invention.

The liquefied gas processing system according to the fourth embodiment is different from that according to the second embodiment in that an expander 52 instead of an expansion valve is used as a decompressor. That is, according to the fourth embodiment, liquefied BOG (LBOG) at least partially liquefied by cooling in a heat exchanger 21 is decompressed while passing through the expander 52 and supplied in a gas-liquid mixed state to a gas-liquid separator 23. Hereinafter, only the difference from the second embodiment will be described in more detail. In addition, like elements to those of the second embodiment are denoted by like numerals, and detailed descriptions thereof will be omitted.

The expander 52 produces energy by expanding high-pressure liquefied BOG to a lower pressure. The LBOG may be decompressed to about atmospheric pressure while passing through the expander 52. The LBOG is separated into gaseous and liquid components in the gas-liquid separator 23. The liquid component, namely, LNG is delivered to the storage tanks 11 through a BOG return line L3, and the gaseous component, namely, BOG flows into the BOG, discharged from the storage tanks 11 and supplied to a compressor 13, through a BOG recirculation line L5. More specifically, the BOG recirculation line L5 extends from an upper end of the gas-liquid separator 23 and is connected to an upstream side of the heat exchanger 21 by a BOG supply line L1.

A decompressor, for example, an expansion valve 24 may be further disposed at the BOG recirculation line L5, and thus, the gaseous component discharged from the gas-liquid separator 23 may be decompressed while passing through the expansion valve 24.

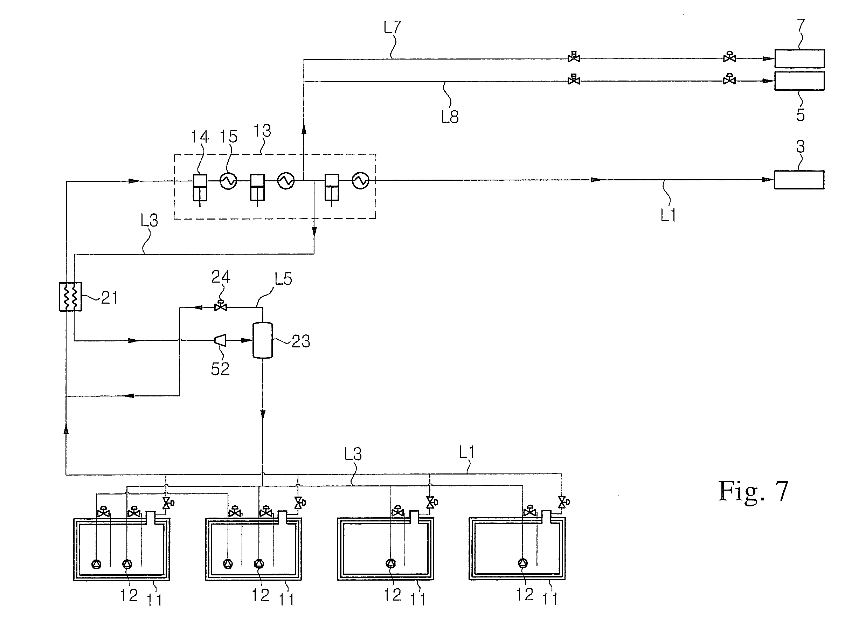

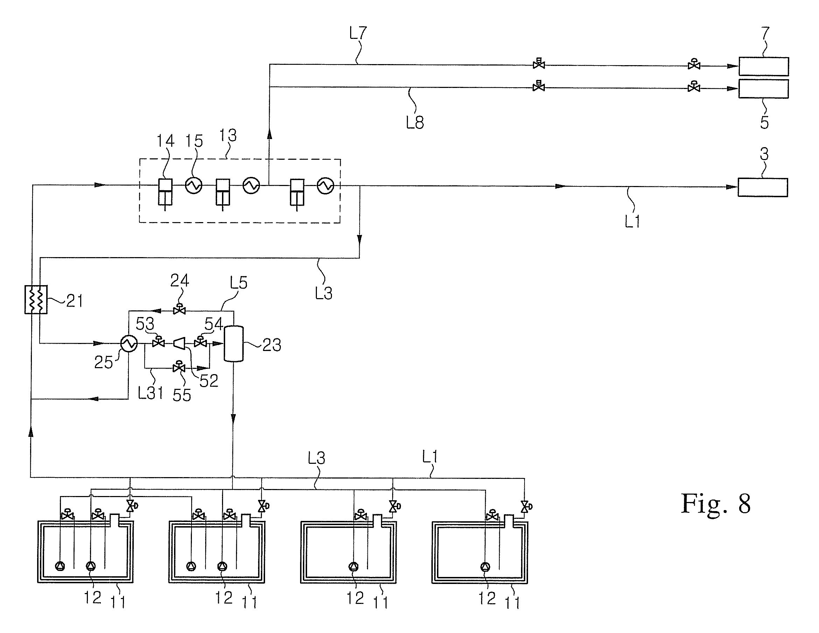

Figures 7 and 8 are schematic configuration diagrams of liquefied gas processing systems for a vessel according to modified examples of the fourth embodiment of the present invention.

In the fourth embodiment shown in Figure 6, the BOG return line L3 for supplying the compressed BOG to the heat exchanger 21 branches off from the rear end of the compressor 13. However, like the aforementioned BOG branch lines L7, L8 or the BOG return line in the modified example of the second embodiment illustrated with reference to Figure 4, a BOG return line L3 according to a modified example of the fourth embodiment shown in Figure 7 may be disposed such that currently stepwise compressed BOG may flow out of a compressor 13. Figure 7 shows a modified example in which BOG compressed in two stages by two cylinders flows out of the compressor.

Referring to a first modified example of the fourth embodiment shown in Figure 7, the liquefied gas processing system according to the fourth embodiment may be modified such that the cooler 25 (shown in Figure 6) as a heat exchanger for additionally cooling BOG cooled and liquefied while passing through the heat exchanger 21 is omitted. Although overall system efficiency may be slightly deteriorated without the cooler 25, there are advantages of facilitating arrangement of pipes and operation of the system and reducing initial installation and maintenance costs for the cooler.

Referring to a second modified example of the fourth embodiment shown in Figure 8, the liquefied gas processing system according to the fourth embodiment may be modified such that an expander 52 and an expansion valve 55 as decompressor are arranged parallel to each other. The expander 52 and the expansion valve 55 arranged in parallel are located between a heat exchanger 21 and a gas-liquid separator 23. In order to install the expansion valve 55 in parallel to the expander 52 and use only one of the expander 52 and the expansion valve 55, a bypass line L31 bypassing the expander 52 is disposed at a BOG return line L3 between the heat exchanger 21 and the gas-liquid separator 23. When liquefied BOG is expanded using only the expander 52, the expansion valve 55 is closed, and when liquefied BOG is expanded using only the expansion valve 55, opening/closing valves 53, 54 disposed at front and rear ends of the expander 52, respectively, on the BOG return line L3 are closed.

As described above, in the system and method for processing liquefied gas according to the fourth embodiment of the invention, like those according to the aforementioned embodiments, BOG generated during transportation of cargo (i.e. LNG) by an LNG carrier can be used as fuel for an engine or stored again in storage tanks through re-liquefaction, thereby making it possible to reduce or eliminate BOG wasted by a GCU or the like and process BOG through re-liquefaction without a re-liquefaction apparatus using a separate refrigerant such as nitrogen or the like.

Even when the system and method for processing liquefied gas according to the fourth embodiment of the invention are employed for plants such as an LNG FPSO unit, an LNG FSRU, and a BMPP in addition to vessels such as an LNG carrier and an LNG RV, BOG generated from storage tanks storing LNG may be used as fuel or re-liquefied in engines (including not only engines for propulsion but also engines for power generation), thereby reducing or eliminating waste BOG.

In addition, in the system and method for processing liquefied gas according to the fourth embodiment of the invention, it is unnecessary to install a re-liquefaction apparatus using a separate refrigerant (i.e. a nitrogen-refrigerant refrigeration cycle or a mixed-refrigerant refrigeration cycle). Therefore, facilities for supplying and storing a refrigerant need not be additionally disposed, thereby reducing initial installation and operation costs for the entire system.

### Embodiment 5

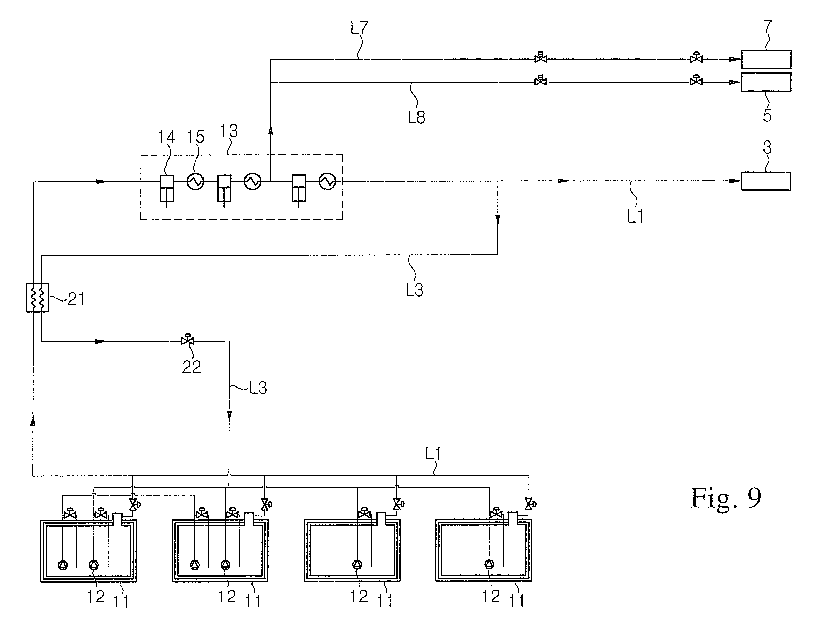

Figure 9 is a schematic configuration diagram of a liquefied gas processing system for a vessel according to a fifth embodiment of the present invention.

The liquefied gas processing system according to the fifth embodiment is different from that according to the second embodiment in that BOG liquefied in a heat exchanger 21 and then decompressed in a decompressor (for example, an expansion valve 22) directly returns to storage tanks 11 without passing through a gas-liquid separator 23. Hereinafter, only the difference from the second embodiment will be described in more detail. In addition, like elements to those of the second embodiment are denoted by like numerals, and detailed descriptions thereof will be omitted.

According to this embodiment, BOG (i.e. two-phase BOG) in a mixed state of a gaseous component (i.e. flash gas) and a liquid component (i.e. liquefied BOG) during liquefaction and decompression returns to the storage tanks 11 through a BOG return line L3. The BOG return line L3 may be configured such that the two-phase BOG returning to the storage tanks 11 is injected to the bottom of the storage tanks 11.

Among the two-phase BOG injected to the bottom of the storage tanks 11, the gaseous component (i.e. flash gas) may partially melt into LNG stored in the storage tanks 11 or may be liquefied through heat exchange with the cold LNG. Flash gas (BOG) not melted or liquefied is discharged again together with BOG (NBOG), additionally generated from the storage tanks, through a BOG supply line L1 from the storage tanks 11. The flash gas discharged from the storage tanks 11 together with the newly generated BOG is re-circulated to a compressor 13 along the BOG supply line L1.

According to this embodiment, the two-phase BOG after expansion is injected to the bottom of the storage tanks 11, thereby increasing the amount of BOG liquefied by the LNG stored in the storage tanks 11, and saving cost of installation and operation through omission of facilities such as the gas-liquid separator, and the like.

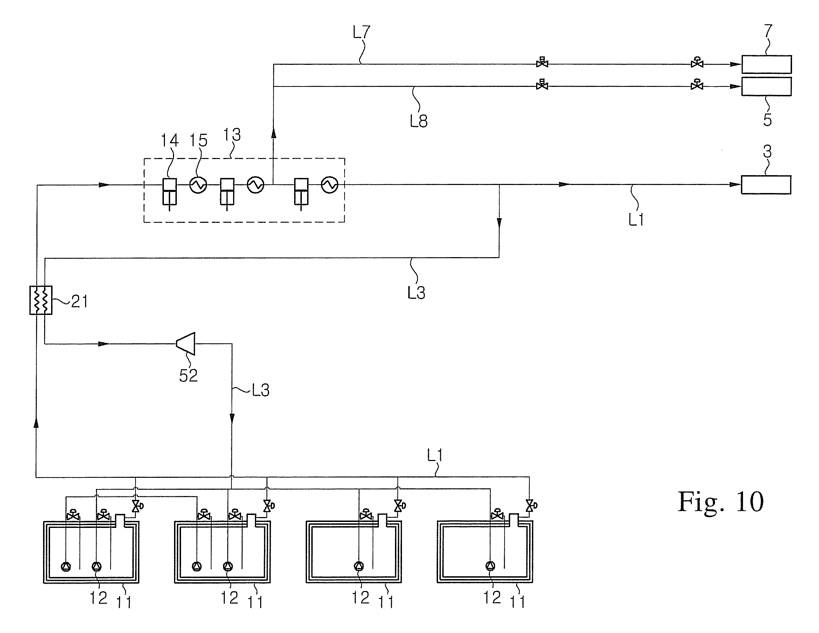

Figure 10 is a schematic configuration diagram of a liquefied gas processing system for a vessel according to a first modified example of the fifth embodiment of the present invention.

The first modified example of the fifth embodiment shown in Figure 10 is different from that according to the fifth embodiment shown in Figure 9 in that an expander 52 instead of the expansion valve is used as a decompressor. That is, according to the first modified example of the fifth embodiment, liquefied BOG (LBOG) liquefied by cooling in a heat exchanger 21 is in a gas-liquid mixed state by decompression while passing through the expander 52, and two-phase BOG returns to storage tanks 11.

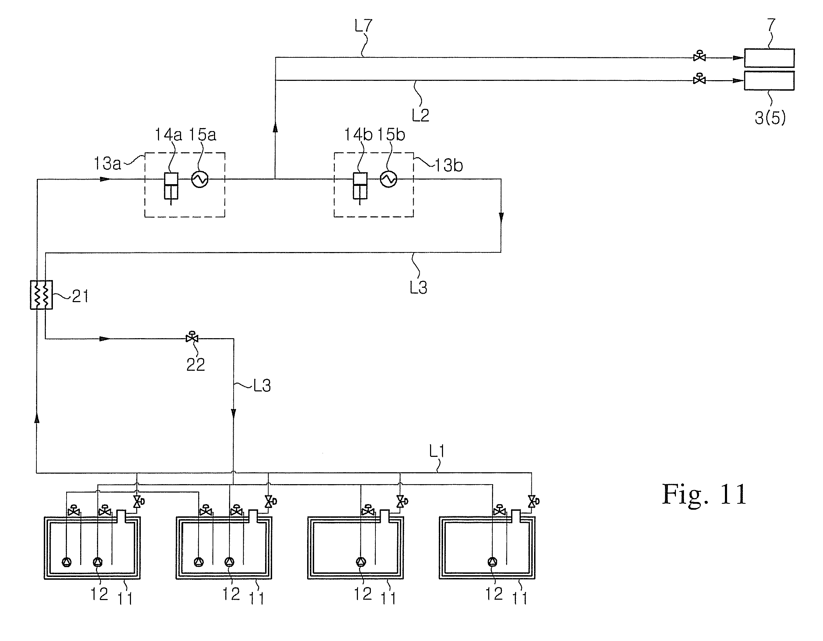

Figure 11 is a schematic configuration diagram of a liquefied gas processing system for a vessel according to a second modified example of the fifth embodiment of the present invention.

The second modified example of the fifth embodiment shown in Figure 11 is different from that according to the fifth embodiment shown in Figure 9 in that a plurality of compressors (for example, a first compressor 13a and a second compressor 13b) instead of the multistage compressor is used as a compression apparatus.

In the liquefied gas processing system according to the second modified example of the fifth embodiment of the invention, NBOG discharged from storage tanks 11, storing liquefied gas, is supplied to the first compressor 13a through a BOG supply line L1. BOG compressed to a pressure of about 5 to 40 bara in the first compressor 13a may be supplied along a fuel supply line L2 to a consumption site, namely, a propulsion system using LNG as fuel (for example, a dual fuel diesel electric (DFDE) engine or a low-speed two-stroke low-pressure gas injection engine). The remaining BOG after supply to the consumption site may be additionally compressed by the second compressor 13b as a booster compressor and then, as in the fifth embodiment, may be liquefied while moving along a BOG return line L3 and return to the storage tanks 11.

Although not shown in the drawing, the fuel supply line L2 for supplying compressed BOG to the consumption site may branch off from a downstream side of the second compressor 13b.

The first compressor 13a may be a one stage compressor including one compression cylinder 14a and one intermediate cooler 15a. The second compressor 13b may be a one stage compressor including one compression cylinder 14b and one intermediate cooler 15b, and if necessary, may also be a multistage compressor including a plurality of compression cylinders and a plurality of intermediate coolers.

BOG compressed to a pressure of about 5 to 40 bara in the first compressor 13a is supplied along the fuel supply line L2 to a consumption site, for example, an auxiliary engine such as a DF engine (i.e. DFDE) or a main engine 3 (i.e. a low-speed two-stroke low-pressure gas injection engine), in which case all or some of the BOG may be supplied to the engine depending upon requisite fuel for the engine.

That is, a first stream referring to BOG discharged from the storage tanks 11 and then compressed by the first compressor 13a (i.e. all BOG discharged from the storage tanks) may be divided into a second stream and a third stream at a downstream side of the first compressor 13a. The second stream may be supplied as fuel to the DF engine (i.e. DFDE), which is a propulsion system, or the low-speed two-stroke low-pressure gas injection engine, and the third stream may return to the storage tanks after liquefaction.

At this time, the second stream is supplied to the DFDE through the fuel supply line L2, and the third stream is liquefied and decompressed after further compression in the second compressor 13b and then returns to the storage tanks 11 through the BOG return line L3. A heat exchanger 21 is disposed at the BOG return line L3 to liquefy the third stream of the compressed BOG. The heat exchanger 21 exchanges heat between the third stream of the compressed BOG and the first stream of the BOG discharged from the storage tanks 11 and then supplied to the first compressor 13a.

Since a flow rate of the first stream of the BOG before compression is greater than that of the third stream, the third stream of the compressed BOG may be cooled (i.e. at least partially liquefied) by receiving exchanging heat with the cold first stream. As such, the heat exchanger 21 exchanges heat between the cryogenic BOG immediately after discharge from the storage tanks 11 and the high-pressure BOG compressed by the compressor 13 to thereby cool (liquefy) the high-pressure BOG.

LBOG cooled by the heat exchanger 21 is decompressed while passing through an expansion valve 22 (for example, J-T valve) as a decompressor and then, continuously returns to the storage tanks 11 while being in the gas-liquid mixed state. The LBOG may be decompressed to about atmospheric pressure (for example, a pressure of 3 bara) while passing through the expansion valve 22.

When generation of excess BOG is expected as BOG within storage tanks 11 exceeds requisite fuel for the main engine 3 or auxiliary engine 5 (for example, during engine stop, low speed sailing, or the like), the BOG compressed in the first compressor 13a flows out of the first compressor via a BOG branch line L7 and then reaches a BOG consumption unit. The BOG consumption unit may include a GCU 7 or gas turbine that may use natural gas as fuel.

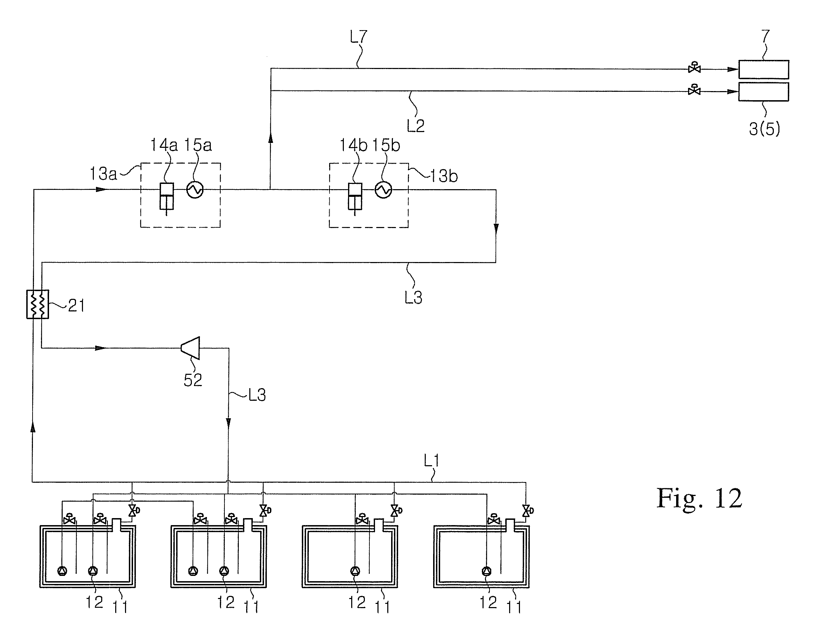

Figure 12 is a schematic configuration diagram of a liquefied gas processing system for a vessel according to a third modified example of the fifth embodiment of the present invention.

The third modified example of the fifth embodiment shown in Figure 12 is different from that according to the second modified example of to the fifth embodiment shown in Figure 11 in that an expander 52 instead of the expansion valve is used as a decompressor. That is, according to the third modified example of the fifth embodiment, LBOG liquefied by cooling in a heat exchanger 21 is in a gas-liquid mixed state by decompression while passing through the expander 52 as the decompressor, and two-phase BOG returns to storage tanks 11.

As described above, in the system and method for processing liquefied gas according to the fifth embodiment of the invention, like those according to the aforementioned embodiments, BOG generated during transportation of cargo (i.e. LNG) by an LNG carrier can be used as fuel of an engine or stored again in storage tanks through re-liquefaction, thereby making it possible to reduce or eliminate BOG wasted by a GCU or the like and to process BOG through re-liquefaction without a re-liquefaction apparatus using a separate refrigerant such as nitrogen or the like.

Even when the system and method for processing liquefied gas according to the fifth embodiment of the invention are employed for plants such as an LNG FPSO, an LNG FSRU, and a BMPP in addition to vessels such as an LNG carrier and an LNG RV, BOG generated from storage tanks storing LNG may be used as fuel or re-liquefied in engines (including not only engines for propulsion but also engines for power generation), thereby reducing or eliminating waste BOG.

In addition, in the system and method for processing liquefied gas according to the fifth embodiment of the invention, it is unnecessary to install a re-liquefaction apparatus using a separate refrigerant (i.e. a nitrogen-refrigerant refrigeration cycle or a mixed-refrigerant refrigeration cycle). Therefore, facilities for supplying and storing a refrigerant need not be additionally disposed, thereby reducing initial installation and operation costs for the entire system.

### Embodiment 6

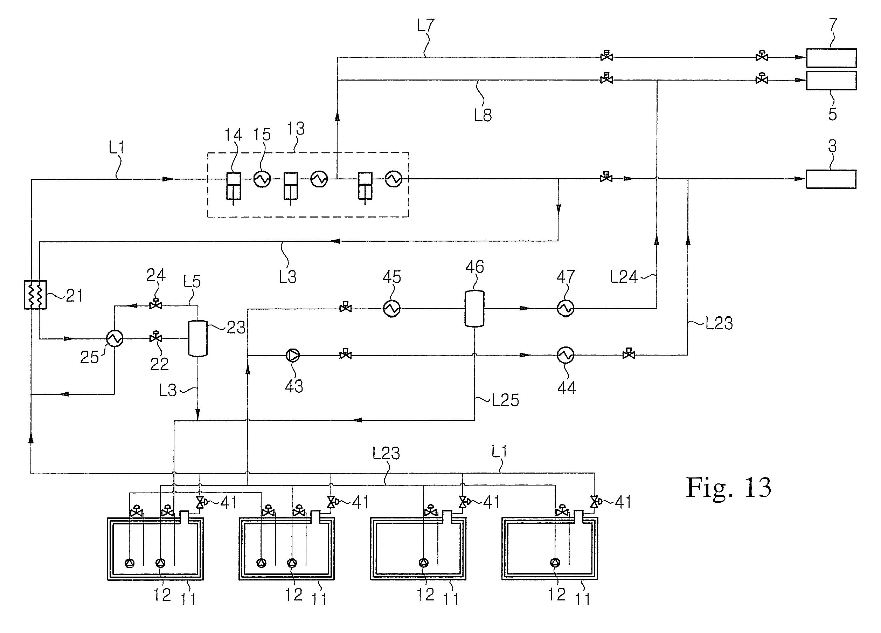

Figure 13 is a configuration diagram of a liquefied gas processing system according to a sixth embodiment of the present invention.

The liquefied gas processing system according to the sixth embodiment of the invention shown in Figure 13 is implemented by integrating the liquefied gas processing system according to the first embodiment shown in Figure 1 (a hybrid system having a line for supplying LNG, compressed by the LNG pump 120, as fuel to a propulsion system and a line for supplying BOG, compressed by the compressor 150, as fuel to a propulsion system) with the liquefied gas processing system according to the second embodiment shown in Figure 2.

Although not shown in the drawing, it should be understood that the liquefied gas processing systems according to the third to fifth embodiments shown in Figures 3 to 12 may be integrated with a hybrid system (see L23, L24, L25 of Figure 13) as shown in Figure 13 according to the present invention.

The liquefied gas processing system for the vessel according to the invention, shown in Figure 13, includes a low-speed two-stroke low-pressure gas injection engine as a main engine 3 and a DF engine (DF generator; DFDG) as an auxiliary engine 5. Generally, a main engine is used in a propulsion application for sailing of a vessel, and an auxiliary engine is used in a power generation application for power supply to various apparatuses and facilities within the vessel. However, the present invention is not restricted by the applications of the main engine and the auxiliary engine. The system may be equipped with a plurality of main engines and auxiliary engines.

The liquefied gas processing system for the vessel according to this embodiment is configured to supply natural gas (i.e. BOG in a gaseous state and LNG in a liquid state), stored in storage tanks 11, as fuel to the engines (i.e. the main engine 3 and the auxiliary engine 5).

In order to supply the gaseous BOG as fuel gas, the liquefied gas processing system for the vessel according to this embodiment includes a main BOG supply line L1 as a BOG supply line for supplying the BOG, stored in the storage tanks 11, to the main engine 3, and a sub-BOG supply line L8 branching off from the main BOG supply line L1 to supply the BOG to the auxiliary engine 5. Although the main BOG supply line L1 has the same configuration as the BOG supply line L1 in the aforementioned embodiments, the main BOG supply line L1 is referred to as "main BOG supply line L1" in the description given with reference to Figure 13, for distinction from the BOG supply line for the DF engine (i.e. the sub-BOG supply line L8). In addition, although the sub-BOG supply line L8 has the same configuration as the BOG branch line L8 in the aforementioned embodiments, the sub-BOG supply line L8 is referred to as "sub-BOG supply line L8" in the description given with reference to Figure 13, for distinction from the main BOG supply line L1.

In order to supply liquid LNG as fuel gas, the liquefied gas processing system for the vessel according to this embodiment includes a main LNG supply line L23 for supplying the LNG, stored in the storage tanks 11, to the main engine 3, and a sub-LNG supply line L24 branching off from the main LNG supply line L23 to supply the LNG to the auxiliary engine 5.

According to this embodiment, a compressor 13 for compressing BOG is disposed at the main BOG supply line L1, and a pump 43 for compressing LNG is disposed at the main LNG supply line L23.

NBOG generated from the storage tanks 11 for storing liquefied gas and discharged through BOG discharge valves 41 is delivered to the compressor 13 along the main BOG supply line L1, compressed by the compressor 13, and then supplied to the main engine 3, for example, the low-speed two-stroke low-pressure gas injection engine. The BOG is compressed to a low pressure of about 5 to 40 bara by the compressor 13 and then supplied to the main engine 3.

While the storage tanks are provided with a sealing and insulation barrier to store liquefied gas such as LNG in a cryogenic state, the storage tanks cannot completely interrupt heat transfer from the outside thereof. Accordingly, liquefied gas continuously evaporates within the storage tanks 11, and BOG within the storage tanks 11 is discharged to maintain pressure of the BOG at an appropriate level.

The compressor 13 may include one or more compression cylinders 14 and one or more intermediate coolers 15 for cooling BOG heated while being compressed. While the multistage compressor 13 including three compression cylinders 14 and three intermediate coolers 15 is exemplified in Figure 13, the number of compression cylinders and intermediate coolers may be varied as needed. In addition, the compressor 13 may be changed to have a structure in which a plurality of compressors is connected to each other in series, in addition to the structure in which a plurality of compression cylinders is arranged within one compressor.

The BOG compressed by the compressor 13 is supplied to the main engine 3 through the main BOG supply line L1, in which case all or some of the compressed BOG may be supplied to the main engine 3 depending upon requisite fuel for the main engine 3.

The sub-BOG supply line L8 for supplying fuel gas to the DF engine which is the auxiliary engine 5 branches off from the main BOG supply line L1. More specifically, the sub-BOG supply line L8 branches off from the main BOG supply line L1 such that BOG being currently compressed in multiple stages in the compressor 13 may flow out of the compressor. In Figure 13, BOG compressed in two stages flows out of the compressor 13, and some of the BOG is supplied to the auxiliary engine 5 through the sub-BOG supply line L8. However, this is merely exemplary, and the system may also be configured such that BOG compressed in one or three stages may flow out of the compressor 13 and some of the BOG may be supplied to the auxiliary engine through the sub-BOG supply line.

As described above, since a methane component having a relatively low liquefaction temperature is preferentially gasified when LNG is heated, BOG with a high methane content may be supplied as fuel to the DF engine as it is. Therefore, a separate apparatus for controlling a methane number need not be disposed at the main- and sub-BOG supply lines.

When generation of excess BOG is expected due to BOG within storage tanks 11 exceeding requisite fuel for the main engine and the auxiliary engine, the liquefied gas processing system of the invention may re-liquefy and return the BOG to the storage tanks.

When BOG exceeding re-liquefaction capacity is generated, BOG having been completely compressed or being currently stepwise compressed in the compressor 13 may flow out of the compressor through a BOG branch line L7 to reach a BOG consumption unit. The BOG consumption unit may include a GCU 7 or gas turbine that may use lower-pressure natural gas as fuel. The BOG branch line L7, as shown in Figure 13, may branch off from the sub-BOG supply line L8.

Since a process in which at least some of the BOG, compressed in the compressor 13 and then supplied to the main engine 3 through the BOG supply line L1, is processed, namely, re-liquefied while passing through a BOG return line L3 and then returns to the storage tanks 11 is similar to that already illustrated with reference to Figure 2, detailed descriptions thereof will be omitted.

Although the BOG return line L3 for supplying compressed BOG to a heat exchanger 21 branches off from a rear end of the compressor 13 in Figure 13, like the BOG branch line L7 or the sub-BOG supply line L8 as a BOG branch line, the BOG return line L3 may be disposed such that the BOG being currently stepwise compressed in the compressor 13 may flow out of the compressor. Figure 13 shows a modified example in which BOG compressed in two stages by two cylinders flows out of the compressor. The BOG flowing out of a middle end of the compressor 13 may have a pressure of about 5 to 10 bara.

Discharge pumps 12 disposed within the storage tanks 11 to discharge LNG to the outside of the storage tanks 11 and the pump 43 for secondarily compressing LNG, compressed primarily in the discharge pumps 12, to a requisite pressure for an MEGI engine are disposed at the main LNG supply line L23. One discharge pump 12 may be disposed within each of the storage tanks 11. While only one pump 43 is shown in Figure 13, a plurality of pumps connected to each other in parallel may be used if necessary.

LNG discharged from the storage tanks 11, storing liquefied gas, through the discharge pumps 12 is delivered to the pump 43 via the main LNG supply line 23. The pump 43 compresses the LNG to a low pressure, and then supplies the low pressure LNG to a heater 44, and the heater 44 gasifies the LNG. The gasified LNG is supplied as fuel to the main engine 3, for example, the low-speed two-stroke low-pressure gas injection engine.

The sub-LNG supply line L24 for supplying fuel gas to the DF engine, which is the auxiliary engine 5, branches off from the main LNG supply line L23. For example, the sub-LNG supply line L24 may branch off from the main LNG supply line L23 such that LNG may flow out of a front-end of the pump 43.

Although the main LNG supply line L23 branches off at an upstream side of the pump 43 in Figure 13, the sub-LNG supply line L24 may branch off from the main LNG supply line L23 at a downstream side of the pump 43 according to a modified example. However, when the sub-LNG supply line L24 branches off from the downstream side of the pump 43, LNG has been additionally compressed by the pump 43. Therefore, a decompressor to decrease the pressure of the LNG to a requisite pressure for the auxiliary engine before the LNG is supplied as fuel to the auxiliary engine may be necessary. When the sub-LNG supply line L24 branches off from the upstream side of the pump 43 as in the embodiment shown in Figure 13, there is an advantage in that an additional decompressor need not be disposed.

A heater 45, a gas-liquid separator 46, and a heater 47 are disposed at the sub-LNG supply line L24 to adjust a methane number and a temperature of LNG, supplied as fuel, to requisite values for the DF engine. Figure 13 exemplifies a case of adjusting the methane number only for fuel supplied to the auxiliary engine 5 but not for fuel supplied to the main engine 3.

As described above, LNG has a lower methane content than BOG so that a methane number of the LNG is lower than a requisite methane number for the DF engine, and ratios of hydrocarbon components (methane, ethane, propane, butane, and the like) constituting LNG vary depending upon production sites. Thus, LNG is not suitable to supply as fuel to the DF engine after gasification as it is.

In order to adjust the methane number, the LNG is partially gasified by heating in the heater 45. The partially gasified fuel gas in a mixed state of a gaseous component (i.e. natural gas) and a liquid component (i.e. LNG) is supplied to the gas-liquid separator 46, and the gas-liquid separator 46 separates the fuel gas into gas and liquid. Since a high heating value heavy hydrocarbon (HHC) component is gasified at a higher temperature, the remaining ungasified LNG in a liquid state among the partially gasified fuel gas has a higher ratio of the heavy hydrocarbon component. Accordingly, the methane number of the fuel gas can be increased by separating the liquid component, namely, the heavy hydrocarbon component in the gas-liquid separator 46.

In consideration of a ratio of a hydrocarbon component contained in the LNG and a requisite methane number for the engine, heating temperature of the heater 45 may be adjusted in order to obtain an appropriate methane number. The heating temperature of the heater 45 may be determined in the range of about -80°C to -120°C. The liquid component separated from the fuel gas in the gas-liquid separator 46 returns to the storage tank 11 through a liquid component return line L5. The BOG return line L3 and the liquid component return line L25 may join together and then extend to the storage tank 11.

The methane number adjusted fuel gas is supplied to the heater 47 through the sub-LNG supply line L24, and the heater 47 heats the fuel gas to a requisite temperature for the auxiliary engine 5 and then supplies as the heated fuel to the auxiliary engine. When the auxiliary engine 5 is, for example, a DFDG, a requisite methane number is usually 80 or higher. For example, in the case of general LNG (generally, methane: 89.6%, nitrogen: 0.6%), a methane number before separation of a heavy hydrocarbon component is 71.3 and in this case, a lower heating value (LHV) is 48,872.8 kJ/kg (based on 1 atm, saturated vapor). When the heavy hydrocarbon component is removed by compressing the general LNG to a pressure of 7 bara and heating it to a temperature of -120°C, the methane number is increased to 95.5 and in this case, the LHV is 49,265.6 kJ/kg.

According to this embodiment, two paths are provided to supply fuel gas to the engine (more specifically, two paths for the main engine 3 and two paths for the auxiliary engine 5). That is, the fuel gas may be supplied to the engine after compression by the compressor 13 or the pump 43.

Particularly, since vessels such as an LNG carrier, an LNG RV, and the like are used to transport LNG from production sites to consumption sites, the vessels sail in a laden state where storage tanks are fully loaded with LNG, when leaving for the consumption sites, and in a ballast state where the storage tanks are nearly empty, when returning to the production sites after unloading of the LNG. In the laden state, a large amount of LNG causes a larger amount of BOG, and in the ballast state, a small amount of LNG causes a smaller amount of BOG.

Although there is some difference in the amount of BOG depending upon storage tank capacity, external temperature, and the like, when an LNG storage tank has capacity of about 130,000 tons to 350,000 tons, the amount of BOG is about 3 to 4 ton/h in a laden state and about 0.3 to 0.4 ton/h in a ballast state. In addition, the requisite amount of fuel gas for the engines may be about 1 to 4 ton/h (a mean value of about 1.5 ton/h) for the main engine and about 0.5 ton/h for the DF engine (DFDG) which is the auxiliary engine. In recent years, boil-off rate (BOR) has been gradually decreased with enhanced thermal insulation performance of storage tanks, and thus the amount of generated BOG has also been decreased.

Accordingly, the fuel gas supply system according to this embodiment, equipped with the compressor lines (i.e. L1, L8 shown in Figure 13) and the pump lines (i.e. L23, L24 shown in Figure 13), can supply fuel gas to the engines through the compressor lines in a laden state where a large amount of BOG is generated, and through the pump lines in a ballast state where a small amount of BOG is generated.

As described above, the system may operate to process all BOG through the auxiliary engine 5 and re-liquefaction in the ballast state where generated BOG is less than requisite fuel for the engine. Alternatively, the system may also operate such that all BOG returns to the storage tanks after re-liquefaction.

Typically, requisite energy for compression of gas (BOG) by a compressor is considerably greater than requite energy for compression of liquid (LNG) by a pump, and the compressor compressing the gas is very expensive and has a large volume. Therefore, it may seem to be economical to use only the pump lines without the compressor lines. For example, a power of 2 MW is consumed to supply fuel to an engine by driving one set of multistage compressors, whereas merely a power of 100 kW is consumed when a pump is used. However, when fuel gas is supplied to engines using only pump lines in a laden state, a re-liquefaction apparatus for re-liquefying BOG is necessarily required so as to process BOG continuously generated in a storage tank. Considering energy consumption of the re-liquefaction apparatus, it may be advantageous to supply fuel gas to the engines through compressor lines in the laden state and through pump lines in the ballast state, while the compressor lines and the pump lines are all disposed.

When BOG generated in a storage tank is less than requisite fuel for a engine as in the ballast state, it may be efficient that a multistage compressor not compress BOG to a requisite pressure for the engine, and the BOG flow out of the compressor through the sub-BOG supply line L8 while being compressed in multiple stages, and then supplied as fuel to the DF engine. That is, when the BOG is supplied to the DF engine after passing through a second-stage compression cylinder of a three-stage compressor, the remaining compression cylinder runs idle. For example, a power of 2 MW is required to compress BOG by driving the entire compressor, whereas a power of 600 kW is required to use only the first and second stage compression cylinders and idle the remaining compression cylinder, and a power of 100 kW is required to supply fuel to an engine through a pump. Accordingly, when BOG is less than requisite fuel for an engine as in the ballast state, it is advantageous in terms of energy efficiency to consume all the BOG by the DF engine and supply LNG as fuel through a pump.

However, if necessary, even when the BOG is less than the requisite fuel for the engine, it is possible to supply as much LNG as needed through forced gasification while supplying the BOG as fuel to the engine through the compressor. In addition, since a small amount of BOG is generated in the ballast state, it is also possible to collect the BOG until a storage tank reaches a predetermined pressure and then intermittently supply the collect BOG as fuel to the auxiliary engine or the main engine, without consuming the BOG every time the BOG is generated.

In the ballast state, BOG compressed by the compressor 13 and LNG compressed by the pump 43 may be simultaneously supplied as fuel to an engine of a vessel. In addition, in the ballast state, BOG compressed by the compressor 13 and LNG compressed by the pump 43 may be alternately supplied as fuel to an engine of a vessel.

A vessel including facilities which are difficult to repair or replace at sea, must be provided with backup facilities (i.e. redundant design) in case of emergency. That is, it is required that a vessel be designed to have a main facility and an extra facility capable of performing the same function as the main facility such that the extra facility is in a standby state when the main facility normally operates, and performs the function of the main facility when the main facility breaks down. Facilities requiring redundant design may include rotary devices, for example, compressors, pumps, and the like.

As described above, a vessel is doubly equipped with various facilities, not used in a normal state, to merely meet redundancy requirements. A fuel gas supply system using two compressor lines may have problems of much cost and space for installation of a compressor and much energy consumption during the use of the compressor, and a fuel gas supply system using two pump lines may have a problem of much energy consumption for processing (i.e. re-liquefaction) of BOG. In contrast, the fuel gas supply system according to the invention, having both the compressor line and the pump line, can allow a vessel to normally sail through one supply line even though there is a problem with the other supply line and, if only one compressor line is disposed, can properly select an optimal fuel gas supply method depending upon the amount of generated BOG while using fewer expensive compressors, thereby achieving additional effects of reducing not only initial construction costs but also operation costs.

In addition, according to the embodiment of the invention, the compressor line and the pump line are disposed together and at the same time, the heat exchanger 21 can re-liquefy BOG without a separate refrigerant refrigeration cycle, thereby most efficiently using liquefied gas.

That is, when the liquefied gas processing system and the hybrid fuel gas supply system are combined as shown in Figure 13 according to the embodiment of the invention, BOG generated during transportation of cargo (i.e. LNG) by an LNG carrier can be used as fuel of an engine or stored again in storage tanks through reliquefaction, thereby making it possible to reduce or eliminate BOG wasted by a GCU or the like and process BOG through re-liquefaction without a re-liquefaction apparatus using a separate refrigerant such as nitrogen or the like.

According to this embodiment, despite a recent trend that the amount of generated BOG is increased with increasing capacity of storage tanks and requisite fuel for an engine is decreased with improved performance of the engine, the remaining BOG, after use as fuel for an engine can be re-liquefied and returned to the storage tanks, thereby preventing waste of the BOG.

Particularly, according to the system and method for processing liquefied gas in accordance with this embodiment, it is unnecessary to install a re-liquefaction apparatus using a separate refrigerant (i.e. a nitrogen-refrigerant refrigeration cycle or a mixed-refrigerant refrigeration cycle). Therefore, facilities for supplying and storing a refrigerant need not be additionally disposed, thereby reducing initial installation and operation costs for the entire system.

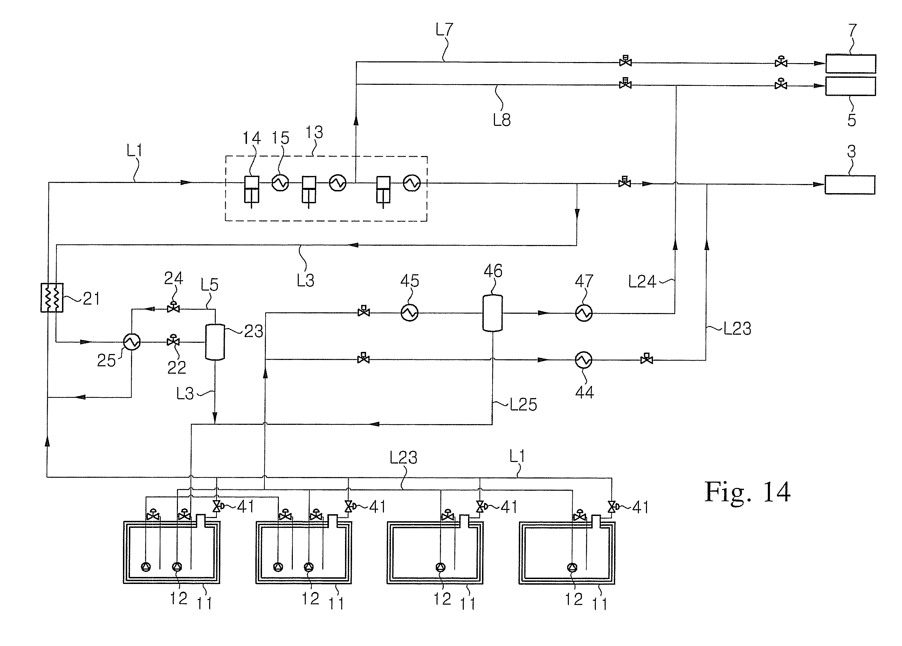

Figures 14 to 17 are schematic configuration diagrams of liquefied gas processing systems for a vessel according to modified examples of the sixth embodiment of the present invention.

According to the sixth embodiment described above, the two pumps, namely, the delivery pump 12 and the LNG pump 43 disposed inside and outside of the storage tank 1, respectively, compress fuel in two stages. However, if only one pump may compress LNG to a requisite pressure for the main engine 3, only one of the delivery pump 2 and the LNG pump 120 may be disposed.

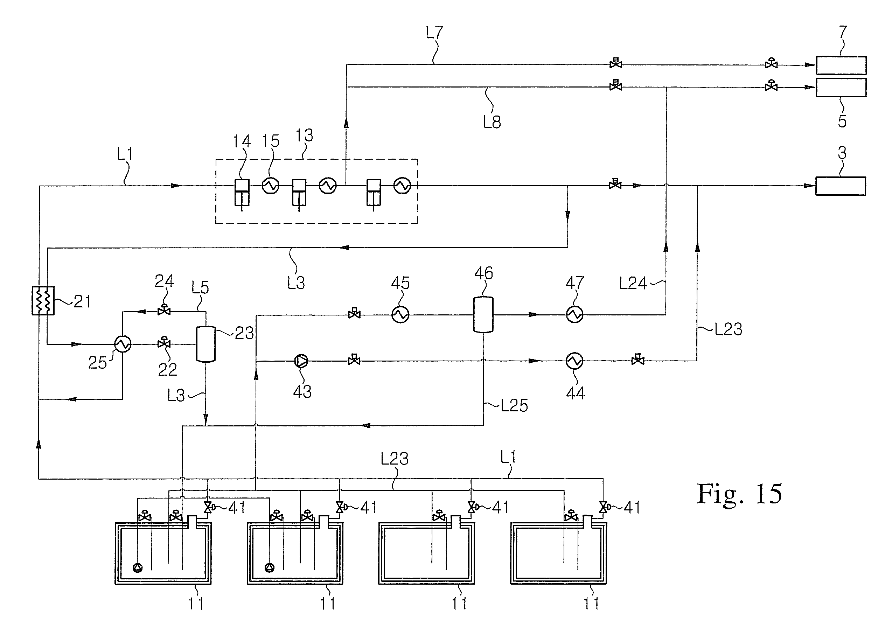

A first modified example of the sixth embodiment shown in Figure 14 is different from the liquefied gas processing system according to the sixth embodiment shown in Figure 13 in that the pump 43 is not disposed at a main LNG supply line L23, and a second modified example of the sixth embodiment shown in Figure 15 is different from the liquefied gas processing system according to the sixth embodiment shown in Figure 13 in that the storage tanks are not equipped therein with the discharge pumps 12.

When a main engine 3 (for example, a low-speed two-stroke low-pressure gas injection engine) requires an appropriate methane number like a DF engine used as an auxiliary engine 5, it is necessary to adjust a methane number of LNG supplied as fuel.

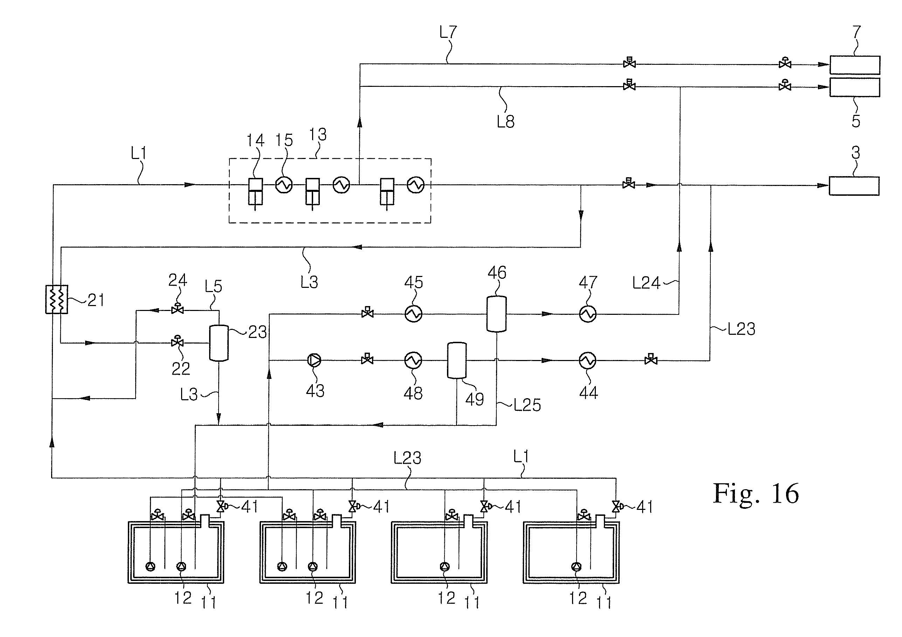

A third modified example of the sixth embodiment shown in Figure 16 is different from the liquefied gas processing system according to the sixth embodiment shown in Figure 13 in that a heater 48 and a gas-liquid separator 49 are disposed at a main LNG supply line L23, like a sub-LNG supply line L24. Since the heater 48 and the gas-liquid separator 49 disposed at the main LNG supply line L23 perform the same functions as a heater 45 and a gas-liquid separator 46 disposed at the sub-LNG supply line L24, detailed description thereof will be omitted.

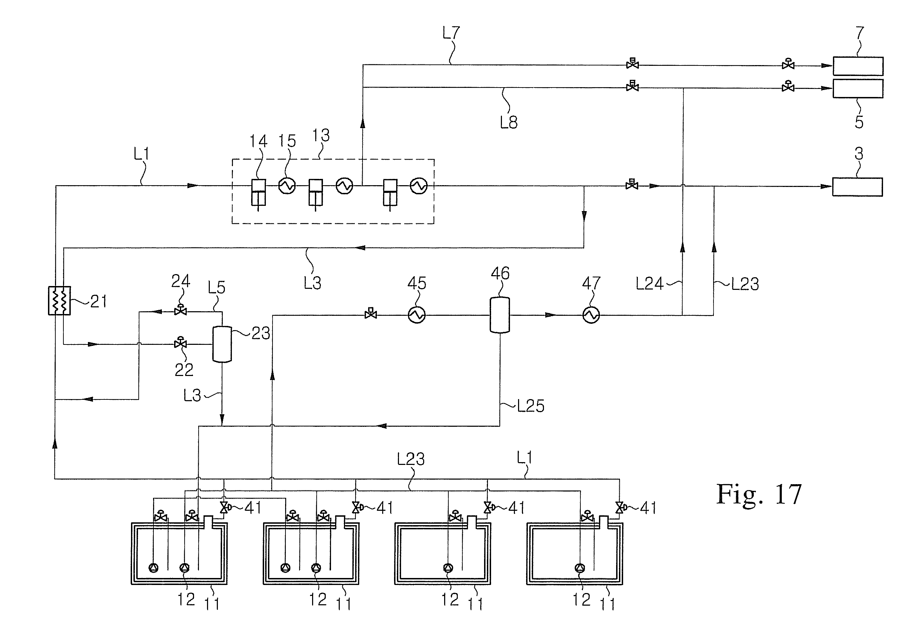

A fourth modified example of the sixth embodiment shown in Figure 17 is different from the liquefied gas processing system according to the sixth embodiment shown in Figure 13 in that a heater 45, a gas-liquid separator 46, and a heater 47 are disposed at a main LNG supply line L23, a sub-LNG supply line L24 branches off from the main LNG supply line L23 at a downstream side of the gas-liquid separator 46 (more specifically, at a downstream side of the heater 47), and the pump 43 is not disposed at the main LNG supply line L23. The heaters 45, 47 have substantially the same function in terms of heating fuel and may have the same configuration in the heating method so as to perform such a function. Although not shown in the drawings, it should be understood that a pump may be disposed at the main LNG supply line L23 even in the fourth modified example of the sixth embodiment.

According to the third and fourth modified examples of the sixth embodiment shown in Figures 16 and 17, respectively, the system may be configured such that the cooler 25 is omitted, like the modified example of the second embodiment shown in Figure 3.

It is apparent to those skilled in the art that the present invention is not limited to the aforementioned embodiments and various modifications or variations can be made without departing from the scope and spirit of the present invention.

## Claims

1. A system for processing liquefied gas for a vessel, comprising:
a storage tank storing liquefied gas;
an engine using the liquefied gas, stored in the storage tank, as fuel; and
a fuel supply line supplying gas, generated by gasification of the liquefied gas, as fuel gas to the engine,
wherein the engine receives the fuel gas compressed to a low pressure.

2. The system according to claim 1, further comprising:
a compressor line compressing boil-off gas (BOG), generated in the storage tank, by a compressor and supplying the compressed BOG as fuel to the engine; and
a pump line compressing LNG, accommodated in the storage tank, through a pump and supplying the compressed LNG as fuel to the engine.

3. The system according to claim 1, further comprising:
a heat exchanger liquefying some of the BOG not supplied as the fuel to the engine.
